(19)

**Europäisches Patentamt**
**European Patent Office**
**Office européen des brevets**

(11)  **EP 3 064 539 B1**

(12)  **EUROPEAN PATENT SPECIFICATION**

(45) Date of publication and mention
of the grant of the patent:
**01.04.2020 Bulletin 2020/14**

(21) Application number: **14862900.9**

(22) Date of filing: **29.10.2014**

(51) Int Cl.:
*C08J 7/04* (2020.01)        *C09J 7/22* (2018.01)
*C08K 3/22* (2006.01)

(86) International application number:
**PCT/JP2014/078823**

(87) International publication number:
**WO 2015/072331 (21.05.2015 Gazette 2015/20)**

(54) **THERMOPLASTIC RESIN FILM, LABEL-ATTACHED HOLLOW MOLDED CONTAINER, ADHESIVE FILM, LABEL, AND FILM FOR PRINTING USE**

THERMOPLASTISCHER HARZFILM, HOHLER FORMBEHÄLTER MIT EINEM DARAN ANGEBRACHTEN ETIKETT, KLEBEFOLIE, ETIKETT UND FILM ZUR VERWENDUNG BEIM DRUCKEN

FILM DE RÉSINE THERMOPLASTIQUE, RÉCIPIENT CREUX MOULÉ À ÉTIQUETTE FIXÉE, FILM ADHÉSIF, ÉTIQUETTE, ET FILM À UTILISER EN IMPRESSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.11.2013 JP 2013237276**

(43) Date of publication of application:
**07.09.2016 Bulletin 2016/36**

(73) Proprietor: **Yupo Corporation**
**Tokyo 101-0062 (JP)**

(72) Inventors:
• **UEDA Takahiko**
**Kamisu-shi**
**Ibaraki 314-0102 (JP)**
• **SHIINA Masaki**
**Kamisu-shi**
**Ibaraki 314-0102 (JP)**

• **ZAMA Takahiro**
**Kamisu-shi**
**Ibaraki 314-0102 (JP)**

(74) Representative: **Zimmermann & Partner**
**Patentanwälte mbB**
**Josephspitalstr. 15**
**80331 München (DE)**

(56) References cited:
JP-A- H0 418 429        JP-A- H1 044 287
JP-A- H07 507 248       JP-A- 2002 079 617
JP-A- 2002 301 797      JP-A- 2003 292 654
JP-A- 2003 292 655      JP-A- 2004 211 014
JP-A- 2006 011 411      JP-A- 2006 143 893
JP-A- 2007 022 033      JP-A- 2007 083 714
JP-A- 2008 024 727      JP-A- 2008 074 901
US-A1- 2008 182 117

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The present invention relates to a thermoplastic resin film, a label-attached hollow molded container, an adhesive film, a label, and a film for printing. More specifically, the present invention relates to a thermoplastic resin film having excellent printability and having less troubles caused by static electricity, a label-attached hollow molded container which is formed by adhering the thermoplastic resin film via in-mold molding, an adhesive film formed by providing an adhesive layer on the thermoplastic resin film, and a label and a film for printing that are formed from the thermoplastic resin film.

Background Art

Techniques of providing labels on plastic containers after the labels are printed by using an in-mold label process and in-mold labels or adhesive labels are known. For example, an in-mold label formed from coextruded plastic film containing a heat activatable ethylene copolymer adhesive layer (heat seal layer) (Patent Document 1), an in-mold label in which a heat sealable resin layer has been embossed (Patent Document 2), an in-mold label using a heat sealable resin layer containing, as a main component, an ethylene/$\alpha$-olefin copolymer obtained by copolymerizing from 40 to 98% by mass of ethylene and from 60 to 2% by mass of $\alpha$-olefin having from 3 to 30 carbons in the presence of a metallocene catalyst (Patent Document 3), a thermoplastic resin film in which the surface is subjected to surface coating containing polyethyleneimine as a main component and which has excellent printability (Patent Document 4), and an electrophotographic label that can be printed using a heat-fixing type electrophotographic printer or heat-fixing type electrophotographic copier (Patent Document 5) are known.

Citation List

Patent Literature

Patent Literature 1: US Patent No. 4,837,075B
Patent Literature 2: Japanese Unexamined Utility Model Application Publication No. H1-105960U
Patent Literature 3: Japanese Unexamined Patent Application Publication No. H9-207166A
Patent Literature 4: Japanese Unexamined Patent Application Publication No. 2000-290411A
Patent Literature 5: Japanese Unexamined Patent Application Publication No. 2003-345052A

Document US 2008/182117 A1 describes a label for in-mold forming comprising a thermoplastic resin film base layer, a heat-sealable resin layer, and an antistatic layer. A coat layer may contain a pigment.

Summary of Invention

Technical Problem

The present invention provides a thermoplastic resin film which has excellent antistatic performance and also has excellent printability or water resistance.

Solution to Problem

In the first aspect of the present invention, a thermoplastic resin film comprising a surface coating layer derived from metal oxide-containing microparticles and a dispersion of an organic polymer in a solvent provided on at least one face of the thermoplastic resin film, a static charge half-life period S on the thermoplastic resin film face that is provided with the surface coating layer being 300 seconds or shorter as measured by a half-life period measurement method stipulated in JIS L 1094:1997, as described in claim 1, is provided.
The thermoplastic resin film described above may contain from 20 to 99% by mass of thermoplastic resin and from 1 to 80% by mass of inorganic fine powder. In the thermoplastic resin film described above, the metal oxide may contain at least one metal selected from the group consisting of aluminum, zinc, tin, and indium. In the thermoplastic resin film described above, a proportion of redissolution C of the surface coating layer to water may be 5% or less. In the thermoplastic resin film described above, the surface coating layer may contain a component derived from a water-soluble polymer.

The thermoplastic resin film described above may comprise a polypropylene film. In the thermoplastic resin film described above, the polypropylene film may be stretched at least in a uniaxial direction. In the thermoplastic resin film described above, the polypropylene film may comprise at least one layer stretched in a biaxial direction. In the thermoplastic resin film described above, the polypropylene film may comprise at least one layer obtained by calender forming. The thermoplastic resin film described above may be a thermoplastic resin film containing from 20 to 40% by mass of polyethylene-based resin and from 60 to 80% by mass of inorganic fine powder. In the thermoplastic resin film described above, a water contact angle H of the surface coating layer may be 70° or greater but less than 120°. In the thermoplastic resin film described above, a coated amount D of the surface coating layer may be from 0.07 to 20 g/m$^2$.

The thermoplastic resin film described above may comprise at least a front face, a substrate layer (A) containing a thermoplastic resin, a heat seal layer (B), and a back face in this order. In the thermoplastic resin film described above, the front face of the thermoplastic resin film may have a surface coating layer.

The thermoplastic resin film described above may comprise at least a front face, a substrate layer (A), a strengthening layer (C), and a back face in this order. In the thermoplastic resin film described above, the content of the inorganic fine powder contained in the substrate layer (A) may be greater than the content of the inorganic fine powder contained in the strengthening layer (C). In the thermoplastic resin film described above, the front face of the thermoplastic resin film may have a surface coating layer.

The thermoplastic resin film described above may comprise at least a front face, a highly smooth layer (D), a substrate layer (A), and a back face in this order. In the thermoplastic resin film described above, the front face of the thermoplastic resin film may have a surface coating layer.

The thermoplastic resin film described above may comprise at least a front face, a substrate layer (A), and a back face in this order. In the thermoplastic resin film described above, each of the front face and the back face may have a surface coating layer.

In the second aspect of the present invention, a label-attached hollow molded container which is formed by adhering the thermoplastic resin film described above by in-mold molding is provided.

In the third aspect of the present invention, an adhesive film comprising an adhesive layer on the back face of the thermoplastic resin film described above is provided.

In the fourth aspect of the present invention, a label using the thermoplastic resin film described above is provided.

In the fifth aspect of the present invention, a film for printing comprising a recording layer on the front face of the thermoplastic resin film described above is provided.

Also disclosed herein is a printed material having printed information on the front face of the thermoplastic resin film described above.

Advantageous Effects of Invention

According to an aspect of the present invention, a thermoplastic resin film having excellent antistatic performance of a surface and having excellent printability or water resistance of a surface coating layer can be obtained. Furthermore, a label-attached container which is formed by adhering the thermoplastic resin film by in-mold molding, an adhesive film having an adhesive layer on a back face of the thermoplastic resin film, and a label using the thermoplastic resin film can be provided.

Description of Embodiments

The present invention will be described below in detail; however, the explanations of configuration requirements described below are examples (representative examples) of embodiments of the present invention, and the present invention is not limited by these descriptions. Note that, in the present invention, expression of "(from)... to..." refers to a numerical range that includes the numbers written in front of and after "to" as the minimum value and the maximum value. Furthermore, expression of "(meth)acrylic acid" refers to both "acrylic acid" and "methacrylic acid". The same applies to "(meth)acrylic acid derivative". In the present specification, "front face" and "back face" refer to a pair of imaginary planes that differ each other but are parallel to each other.

Nowadays containers, such as plastic containers, having various sizes and shapes are used to contain various liquids (e.g. edible oil, liquid seasoning, beverages, alcoholic beverages, detergent for kitchen, detergent for clothes, shampoo, hairdressing, liquid soap, rubbing alcohol, oil for automobile, detergent for automobile, agricultural chemicals, insecticide, herbicide, liquid medicine, blood, and the like) to distribute, display, purchase, store, and use. Containers are produced by blow molding, injection molding, heat sealing, and the like as containers having a monolayer using a resin, such as polyethylene, polypropylene, polyester, polyamide, or the like, or a plurality of layers using these resins.

To specify the contained contents, a container is provided with a label having a trade name and other information. For example, after forming a container, a label containing a heat-shrinkable film or a label containing a substrate, such as paper or a film, and a pressure-sensitive adhesive agent is provided on the container. On the other hand, when a container is produced by employing in-mold label process, a label is provided on a container, such as a plastic container, at the same time as the formation of the container. In in-mold label process, a label is introduced to a mold and then raw materials of the container body are supplied to the mold. By this, the label is provided on the container at the same time as the container is molded in the mold. According to the in-mold label process, a step of adhering a label after molding a container is not necessary, and there is no need for storing a container molded product in preparation for the step of adhering a label. As a result, simplification or labor-saving of the production process can be achieved. Furthermore, a space for storing the goods in process can be made smaller. Furthermore, the label-attached hollow molded containers can be shipped immediately.

When a container is produced by employing heat sealing process, first, a label is adhered to the surface of the heat sealable film using a pressure-sensitive adhesive agent or the like. Then, the heat sealable film on which the label was adhered is formed into a shape of a container having an opening by employing heat sealing process. The opening may have heat sealability. Sterilization treatment may be performed after contents are injected to the container described above and the opening is sealed by heat sealing. In this case, adhering of labels of different containers or adhering of a label on a container to another container after the sterilization treatment can be prevented. As a result, for example, handling reliability at the site of food production or medical treatment, or the like is enhanced.

Production steps of a label include a step of producing a label by punching out a thermoplastic resin film in a particular shape. However, there is a case where a plurality of labels that have been punched out in a particular shape are adhered to each other and cannot be separated easily due to electro static charge of labels, adhesion of label materials, or the like (also referred to as "blocking phenomenon"). As a result of conducting various research in light of the above problems, the inventors of the present invention have found that the above problems can be resolved by a thermoplastic resin film comprising a surface coating layer derived from metal oxide-containing microparticles and a dispersion of an organic polymer in a solvent provided on at least one face of the thermoplastic resin film. In the thermoplastic resin film, a static charge half-life period S on the thermoplastic resin film face that is provided with the surface coating layer is 300 seconds or shorter as measured by a half-life period measurement method stipulated in JIS L 1094:1997. According to the present embodiment, a thermoplastic resin film having an excellent antistatic performance of the surface can be obtained. Therefore, occurrence of the blocking phenomenon described above can be suppressed and handling of the label becomes simple and easy.

Since the thermoplastic resin film of the present embodiment has excellent antistatic performance of the surface, it is possible to suppress the plurality of labels from adhering each other during printing when the trade name and other information are printed on the thermoplastic resin film. As a result, paper feeding of the printer can be made stable. Furthermore, when a printer having a print head is used, if the surface of a label is electro statically charged, dust may be adhered to the print head and degrade printing quality. However, since the thermoplastic resin film of the present embodiment has excellent antistatic performance of the surface, degradation of the printing quality described above can be suppressed. Furthermore, the thermoplastic resin film of the present embodiment has a surface coating layer derived from metal oxide-containing microparticles and a dispersion of an organic polymer in a solvent. Therefore, it is possible to suppress the phenomenon in which a plurality of labels that are punched out in a particular shape are adhered to each other due to the adhesivity of the label material. Furthermore, when information is printed on a thermoplastic resin film by a printing method having a heat-fixing process, melting and adhering of the thermoplastic resin film to a hot roller can be suppressed.

Coating layer

The thermoplastic resin film, which has a coating layer, comprises a surface coating layer derived from metal oxide-containing microparticles and a dispersion of an organic polymer in a solvent provided on at least one face of the thermoplastic resin film. The static charge half-life period S on the thermoplastic resin film face that is provided with the surface coating layer is preferably 300 seconds or shorter, more preferably 200 seconds or shorter, and even more preferably 100 seconds or shorter, as measured by a half-life period measurement method stipulated in JIS L 1094:1997.

By this, for example, handling failure due to occurrence of static electricity can be prevented in a sheet printing step, a label transporting step, or a step of inserting label to a mold. Furthermore, the surface coating layer described above has excellent printability or water resistance. For example, the surface coating layer described above has superior water resistance compared to a surface coating containing a polyethyleneimine as a main component. Furthermore, the surface coating layer described above has superior storage stability compared to a surface coating containing a polyethyleneimine as a main component. By this, even when the thermoplastic resin film prior to printing is stored in a high humidity environment, deterioration of the surface coating layer can be suppressed. As a result, failure in ink transfer can be prevented. Furthermore, the surface coating layer is derived from metal oxide-containing microparticles and a dispersion of an organic polymer in a solvent. Therefore, the surface coating layer of the present invention is less likely to cause surface contamination compared to a surface coating containing, as a main component, a polyethyleneimine having adhesion.

Metal oxide-containing microparticles

The metal oxide-containing microparticles preferably contain at least one of a sol of inorganic particles having a layer of metal oxide on the surface of the inorganic particles, or a sol of metal oxide. The sol of inorganic particles may be a colloidal silica sol having a metal oxide layer on the surface of the colloidal silica. The method of producing a colloidal silica sol is not particularly limited; however, examples thereof include a method in which, from an alkali metal silicate aqueous solution (e.g. water glass) as a raw material, alkali metal salt is removed by an ion exchange resin or electrophoresis method or the like to form a silicic anhydride sol and then an acid or alkali is added to adjust the pH and to stabilize; a method in which an alkoxide, such as tetraethoxide orthosilicate (TEOS), is hydrolyzed by an acid or alkali (so-called sol-gel method); a method in which synthesis is performed by introducing an organosilicon compound, such as silicon tetrachloride, to a flame of hydrogen or the like (so-called gas phase method); or the like.

The colloidal silica sol may be a cationic colloidal silica sol or an anionic colloidal silica sol. The colloidal silica sol may be a cationic compound-coated colloidal silica sol in which the surface of an anionic colloidal silica is coated with a cationic compound. The cationic compound-coated colloidal silica sol may be a metal oxide-coated colloidal silica sol in which the surface of an anionic colloidal silica is coated with a metal oxide. The cationic compound-coated colloidal silica sol can be obtained by, for example, adding a cationic compound or a precursor thereof to a colloidal silica sol in a step in or after a dispersing step in which silica is dispersed in a dispersion medium. The metal oxide-coated colloidal silica sol can be obtained by, for example, adding a metal oxide or a precursor thereof to a colloidal silica sol in a step in or after a dispersing step of silica. For example, an alumina-coated colloidal silica sol can be obtained by treating the surface of the colloidal silica by adding a water-soluble aluminum salt to a colloidal silica sol. By using a cationic alumina-coated colloidal silica sol as the metal oxide-containing microparticles, at least one of antistatic performance or printability is enhanced compared to the case where an anionic colloidal silica sol is used.

The colloidal silica particles contained in the colloidal silica sol may have a silanol group ($\equiv$Si-OH) on the surface. Furthermore, the particles described above may be monodispersed microparticles. The value of the coefficient of variation (CV value; %) of the particles described above is preferably 15% or less, more preferably 10% or less, and even more preferably 5% or less. The particles described above may be in a long chain shape.

Examples of the metal oxide sol include a hafnium oxide sol, zirconium oxide sol, zinc oxide sol, titanium oxide sol, yttrium oxide sol, aluminum oxide sol, copper oxide sol, germanium oxide sol, tungsten oxide sol, indium oxide sol, tin oxide sol, and the like. Examples of the method of producing, for example, an aluminum oxide sol as the metal oxide sol include a method of producing by hydrolyzing an alkoxide, such as aluminum isopropoxide, with an acid, a method of synthesizing by introducing an aluminum chloride to a flame of hydrogen or the like (so-called gas phase method), and the like.

The particles contained in the metal oxide sol may be monodispersed microparticles. The value of the coefficient of variation (CV value; %) of the particles described above is preferably 15% or less, more preferably 10% or less, and even more preferably 5% or less. The particles described above may be in a long chain shape.

The metal oxide used in the colloidal silica sol, in which the surface of the colloidal silica has a layer of metal oxide, and the metal oxide sol preferably contains at least one metal selected from the group consisting of aluminum, zinc, tin, and indium, and more preferably contains aluminum. The metal oxide may be alumina. When the metal oxide is alumina, the surfaces of the colloidal silica sol, in which the surface of the colloidal silica has a layer of metal oxide, and the metal oxide sol become cationic, thereby enhancing at least one of antistatic performance or printability.

The average primary particle size of the metal oxide-containing microparticles is 200 nm or less, preferably 100 nm or less, and more preferably 25 nm or less. When the average particle size of the metal oxide-containing microparticles is 200 nm or less, surface glossiness of the thermoplastic resin film tends to be achieved, and antistatic performance of the thermoplastic resin film tends to be achieved. Furthermore, strength of the coating layer is further enhanced. On the other hand, the average primary particle size of the metal oxide-containing microparticles is preferably 1 nm or greater, more preferably 4 nm or greater, and even more preferably 7 nm or greater. When the average primary particle size described above is 1 nm or greater, production of the particles is facilitated. Note that the average primary particle size of the metal oxide-containing microparticles described above is calculated as an average value of equivalent circle diameters that correspond to the particle areas observed using a transmission electron microscope (TEM).

The coating layer of the surface of the thermoplastic resin film preferably contains 30% by mass or greater, and more preferably 40% by mass or greater, of the metal oxide-containing microparticles relative to the total amount of the coating layer. When the content of the metal oxide-containing microparticles is 30% by mass or greater, antistatic performance of the thermoplastic resin film tends to be achieved. It is also possible to suppress adhesion of dust to a print head in a printing method employing a printer having a print head, and to suppress melting and adhering of the thermoplastic resin film to a hot roller in a printing method having a heat-fixing process.

On the other hand, the coating layer of the surface of the thermoplastic resin film preferably contains 85% by mass or less, and more preferably 70% by mass or less, of the metal oxide-containing microparticles relative to the total amount of the coating layer. When the content of the metal oxide-containing microparticles is 85% by mass or less, printability is further enhanced. For similar reasons, the ratio of the mass of the metal oxide-containing microparticles in the coating solution for forming a surface coating layer to the mass of the dispersion of an organic polymer in a solvent is preferably from 30:70 to 85:15, more preferably from 40:60 to 85:15, and even more preferably from 40:60 to 70:30.

Dispersion of organic polymer in solvent

The dispersion of an organic polymer in a solvent may be nonionic, may have the same type of ionicity as that of the metal oxide-containing microparticles, or may have the same type of ionicity as that of the coating agent. By this, aggregation of the metal oxide-containing microparticles in the coating agent for forming a surface coating layer can be prevented. As a result, the metal oxide-containing microparticles can be stably dispersed in the coating agent. For example, when the metal oxide-containing microparticles is cationic, also the dispersion of an organic polymer in a solvent is preferably cationic, and it is more preferable to select all the raw materials contained in the coating agent from nonionic or cationic substances.

The dispersion of an organic polymer in a solvent is preferably a vinyl-based resin emulsion or a polyurethane resin emulsion. By this, the metal oxide-containing microparticles can be adhered and fixed on the surface of the thermoplastic resin film. For similar reasons, the weight average molecular weight of the resin used in the dispersion of an organic polymer in a solvent is preferably 1,000 or greater, more preferably 3,000 or greater, and even more preferably 5,000 or greater.

The vinyl-based resin emulsion may be a cationic vinyl-based copolymer emulsion. The cationic vinyl-based copolymer emulsion is a substance in which a vinyl-based copolymer having a quaternary ammonium salt structure in a molecule is dispersed in a solvent. The concentration of the vinyl-based copolymer in the vinyl-based resin emulsion is preferably from 20 to 80% by mass, more preferably from 30 to 70% by mass, and even more preferably from 40 to 60% by mass.

The vinyl-based monomer constituting the vinyl-based copolymer may be at least one type selected from the group consisting of olefins; vinyl esters; unsaturated carboxylic acids and alkali metal salts or acid anhydrides thereof; esters of alkyl group having a branched or ring structure and having 12 or less carbons; (meth)acrylamide and derivatives having an alkyl group having from 1 to 4 carbons and an alkylene group having 1 or 2 carbons at the same time; and dimethyldiallylammonium salts. Note that the salts described above are acid residues, and acid ions thereof are preferably methyl hydrogen sulfate ions and chloride ions.

Examples of the olefin include ethylene, propylene, 1-butene, butadiene, and the like. Examples of the vinyl esters include vinyl acetate and the like. Examples of the unsaturated carboxylic acids include (meth)acrylic acid, maleic acid, and the like. Examples of the (meth)acrylamide and derivatives having an alkyl group having from 1 to 4 carbons and an alkylene group having 1 or 2 carbons at the same time include N-alkylaminoalkylene (meth)acrylate, N-alkylaminoalkylene (meth)acrylamide, N,N-dialkylaminoalkylene (meth)acrylate, N,N-dialkylaminoalkylene (meth)acrylamide, (meth)acryloyloxyalkylene trialkylammonium salts, (meth)acryloylaminoalkylene trialkylammonium salts, and the like.

To obtain a copolymer having a quaternary ammonium salt structure in a molecule, direct copolymerization may be performed using monomers having a quaternary ammonium salt structure selected from the above as an essential component, quaternization may be performed by, after a copolymer is obtained using monomers having a tertiary amine structure selected from the above as an essential component, subjecting the tertiary amine to the quaternization using a quaternizing agent, such as dimethyl sulfate, 3-chloro-2-hydroxypropyltrimethylammonium chloride, and glycidyltrimethylammonium chloride, or grafting of monomers having a tertiary ammonium salt structure may be performed after a copolymer is obtained by using monomers having no nitrogen.

The polyurethane resin emulsion may be a cationic polyurethane resin emulsion. The cationic polyurethane resin emulsion is a substance formed by dispersing, in a solvent, a copolymer in which a cationic group is introduced to a polyurethane resin backbone. The concentration of the copolymer described above in the polyurethane resin emulsion is preferably from 5 to 50% by mass, more preferably from 10 to 40% by mass, and even more preferably from 20 to 30% by mass. The copolymer described above may be formed by quaternization using a quaternizing agent to a urethane resin obtained by reacting polyisocyanate with a tertiary amino group-containing polyol obtained by reacting a compound having two epoxy groups in a molecule with a secondary amine. The copolymer may be formed by subjecting a urethane resin, obtained by adding at least one type selected from the group consisting of N,N-dialkylalkanolamines; N-alkyl-N,N-dialkanolamines, such as N-methyl-N,N-diethanolamine and N-butyl-N,N-diethanol amine; and trialkanolamines to a part of polyol to react with polyisocyanate, to quaternization using a quaternizing agent.

The solvent used in the dispersion of an organic polymer in a solvent preferably contains a water-soluble solvent, and more preferably contains water, and even more preferably contains 90% or greater of water. By this, dissolution of the organic polymer into the solvent can be suppressed and stability of the dispersion is enhanced. Furthermore, an electrical double layer is stably formed on the surfaces of the metal oxide-containing microparticles. As a result, stability of the dispersion of the metal oxide-containing microparticles is enhanced.

Examples of the method of forming an emulsion by dispersing, in water, the vinyl-based copolymer having a quaternary ammonium salt structure in a molecule or the copolymer in which a cationic hydrophilic group is introduced to a polyurethane resin backbone include a method in which monomers constituting the target polymer are emulsified and dispersed in water to polymerize, a method in which the target polymer is obtained by bulk polymerization or the like and then raw material resins are melt-kneaded and then emulsified using a twin-screw extruder, and the like. The amount of cation introduced to the vinyl-based copolymer having a quaternary ammonium salt structure in a molecule or the copolymer in which a cationic hydrophilic group is introduced to a polyurethane resin backbone is determined as an equivalent, in terms of colloid, obtained by subjecting the dispersion of an organic polymer in a solvent to a colloid titration method using a potassium polyvinyl sulfate solution. For the metal oxide-containing microparticles to be stably dispersed in the coating agent of the surface coating layer, the equivalent, in terms of colloid, of the dispersion of an organic polymer in a solvent is preferably 0.2 meq/g or greater, more preferably 0.6 meq/g or greater, and even more preferably 1.0 meq/g or greater. On the other hand, when the equivalent, in terms of cation, of the vinyl-based copolymer having a quaternary ammonium salt structure in a molecule or the copolymer in which a cationic hydrophilic group is introduced to a polyurethane resin backbone is too high, the proportion of redissolution of the surface coating layer to water tends to be increased. Therefore, the equivalent, in terms of cation, of the dispersion of an organic polymer in a solvent is preferably 5 meq/g or less, more preferably 4 meq/g or less, and even more preferably 3 meq/g or less.

The coating layer of the surface of the thermoplastic resin film preferably contains 15% by mass or greater, and more preferably 30% by mass or greater, of the dispersion of an organic polymer in a solvent relative to the total amount of the coating layer. When the content of the dispersion of an organic polymer in a solvent is 15% by mass or greater, printability of the thermoplastic resin film is further enhanced. On the other hand, the coating layer of the surface of the thermoplastic resin film preferably contains 65% by mass or less, and more preferably 60% by mass or less, of the dispersion of an organic polymer in a solvent relative to the total amount of the coating layer. By this, antistatic performance of the thermoplastic resin film tends to be achieved.

Water-soluble polymer

In the thermoplastic resin film of the present invention, the surface coating layer, which is provided on at least one face, preferably contains a component derived from a water-soluble polymer. The water-soluble polymer preferably dissolves in water in the coating agent containing the surface coating layer raw materials but preferably does not redissolve in water after the coating agent is coated to the surface of the thermoplastic film surface and dried.

Examples of the water-soluble polymer include vinyl-based copolymers, such as polyvinylpyrrolidone; hydrolyzates of vinyl-based copolymers, such as partially saponified polyvinyl alcohols (hereinafter, also referred to as "PVA"), fully saponified PVAs, and alkali metal salts or ammonium salts of isobutylene-maleic anhydride copolymers; (meth)acrylic acid derivatives, such as sodium poly(meth)acrylate and poly(meth)acrylamide; modified polyamides; cellulose derivatives, such as carboxymethyl cellulose and carboxyethyl cellulose; ring-opening polymerization polymers and modified substances thereof, such as polyethyleneimine, polyethylene oxide, and polyethylene glycol; and natural polymers and modified substances thereof, such as gelatin and starches. Among these, use of partially saponified PVA, fully saponified PVA, polyethyleneimine, or polyethyleneimine modified substance is preferable.

In the present invention, the water-soluble polymer is preferably contained at 0 parts by mass or greater but 300 parts by mass or less per 100 parts by mass total of the metal oxide-containing microparticles and the emulsion in the surface coating layer. From the perspective of preventing the metal oxide-containing microparticles from easily shedding from the surface of the thermoplastic resin film, more preferably 10 parts by mass or greater, and even more preferably 30 parts by mass or greater, of the water-soluble polymer is contained. On the other hand, from the perspective of making the printability and processability of the surface of the thermoplastic resin film suitable, more preferably 200 parts by mass or less, and even more preferably 150 parts by mass or less, of the water-soluble polymer is contained.

Furthermore, since the water-soluble polymer, except the fully saponified PVA, redissolves in water after being coated and dried as a coating agent, a crosslinking agent is preferably added. The crosslinking agent is not particularly limited as long as the crosslinking agent is a substance that reacts with the water-soluble polymer used in the coating agent, and examples thereof include carbodiimides; diisocyanates; diglycidyl ethers; and the like. The crosslinking agent is contained at preferably 0.1 to 200 parts by mass, more preferably 1 to 200 parts by mass, and even more preferably 1 to 50 parts by mass, per 100 parts by mass of the water-soluble polymer. The crosslinking agent may be contained at 5 to 10 parts by mass per 100 parts by mass of the water-soluble polymer.

Method of blending coating agent

When the surface coating layer is provided in the thermoplastic resin film, it is preferable to coat the coating agent containing at least the metal oxide-containing microparticles and the dispersion of an organic polymer in a solvent and then dry. The coating agent is preferably easily blended and coated and hard to be deteriorated over time (in particular, viscoelasticity and decomposition).

In the production step of the coating agent, at least one of the metal oxide-containing microparticles or the dispersion of an organic polymer in a solvent may be aggregated, for example, when the solid concentrations of the metal oxide-containing microparticles and the dispersion of an organic polymer in a solvent are high, when the pH of the coating agent is close to the isoelectric point of the organic polymer, when the zeta potential of the metal oxide-containing microparticles and the zeta potential of the dispersion of an organic polymer in a solvent have opposite charges, or when an ionic substance having high valence (in particular, a polymer having a functional group) is added. Therefore, in the production step of the coating agent, it is preferable to adjust the concentration of each raw material so that the concentration is not locally increased, by sequentially charging each raw materials to dilution water or by appropriately adjusting the order of charging or the rate of charging. In the production step of the coating agent, repulsive force of the particles may also be increased by adjusting the pH of the coating agent or by adding a dispersing agent. By these, aggregation can be suppressed.

The solid concentration of the surface coating layer raw materials in the coating agent can be appropriately adjusted depending on the coated amount after drying of the surface coating layer and the coating method of the coating agent; however, the solid concentration is preferably from 0.5 to 35% by mass, more preferably from 0.5 to 20% by mass, and even more preferably from 3 to 20% by mass. The solid concentration of the surface coating layer raw material in the coating agent may be from 3 to 15% by mass. The pH of the coating agent needs to be a pH that does not cause aggregation of each raw material contained in the coating agent; however, from the perspectives of safety of workers and preventing corrosion of machines, pH of 3 to 11 is preferable, and pH of 4 to 10 is more preferable.

Thermoplastic resin film

The thermoplastic resin film may have a monolayer structure or a multilayer structure including two or more layers. In an embodiment, the thermoplastic resin film comprises at least a front face, a substrate layer (A) containing a thermoplastic resin and a back face in this order. In this case, at least one of the front face or the back face of the thermoplastic resin film has a surface coating layer derived from metal oxide-containing microparticles and a dispersion of an organic polymer in a solvent.

The thermoplastic resin film preferably contains a thermoplastic resin that can be used in the substrate layer (A) described below. The thermoplastic resin film preferably contains a polyester film, polyethylene film, or polypropylene film. By this, a thermoplastic resin film having excellent formability or durability can be obtained. The film described above may be stretched at least in a uniaxial direction. The film described above may comprise at least one layer stretched in a biaxial direction. The film described above may also comprise at least one layer obtained by calender forming.

Preferred aspects of layers constituting the thermoplastic resin film will be described below. However, the thermoplastic resin film is not limited to these.

Substrate layer (A)

The substrate layer (A) may be a monolayer structure, a two layer structure, or a multilayer structure having three or more layers. Furthermore, the substrate layer (A) may have a symmetric layer structure or asymmetric layer structure.

Thermoplastic resin

The substrate layer (A) contains a thermoplastic resin. Types of the thermoplastic resin used in the substrate layer (A) is not particularly limited as long as the thermoplastic resin can form a film. Examples thereof include olefin-based resins, such as high density polyethylene, medium density polyethylene, low density polyethylene, polypropylene, propylene-based copolymer resins, polymethyl-1-pentene, and ethylene/cyclic olefin copolymers; styrene-based resins, such as atactic polystyrene, syndiotactic polystyrene, and styrene-maleic acid copolymers; ester-based resins, such as polyethylene terephthalate, polyethylene terephthalate isophthalate, polybutylene terephthalate, polybutylene succinate, polybutylene adipate, and polylactic acid; functional group-containing polyolefin resins, such as ethylene/vinyl acetate copolymers, ethylene/acrylic acid copolymers, maleic acid-modified polyethylene, maleic acid-modified polypropylene; amide-based resins, such as nylon-6 and nylon-6,6; polycarbonates; and the like. Among these resins, one type may be used or two or more types may be used in combination.

Among these thermoplastic resins, from the perspective of achieving excellent processability of film, olefin-based resins or functional group-containing olefin-based resins are preferable, and use of olefin-based resins is more preferable. Among the olefin-based resins, from the perspectives of achieving chemical resistance, processability, and low costs, ethylene-based resins and propylene-based resins are preferable.

Examples of the ethylene-based resin include high density polyethylene, medium density polyethylene, low density polyethylene, straight-chain low density polyethylene, random copolymers or block copolymers of ethylene with $\alpha$-olefin, such as propylene, 1-butene, 1-pentene, 1-hexene, and 1-heptene, ethylene-vinyl acetate copolymers, ethylene-acrylic acid copolymers, ethylene-methacrylic acid copolymers, and the like.

Examples of the propylene-based resin include polypropylene that is a homopolymer of propylene and that shows stereoregularity, such as being isotactic, syndiotactic, or atactic, copolymers that have propylene as a main component, and that is formed by copolymerizing propylene with at least one type of $\alpha$-olefins, such as ethylene, 1-butene, 1-hexene, 1-heptene, 1-octene, and 4-methyl-1-pentene. Furthermore, the copolymer may be a random copolymer or block copolymer.

The olefin-based resin or the functional group-containing olefin-based resin described above may be subjected to graft modification. The graft modification is exemplified by a method of reacting, for example, unsaturated carboxylic acid or derivatives thereof in the presence of peroxy acids, such as peracetic acid, persulfuric acid, and potassium persulfate, and metal salts thereof; or an oxidizing agent, such as ozone. The proportion of the graft modification is typically from 0.005 to 10% by mass, and preferably from 0.01 to 5% by mass, relative to the olefin-based resin or functional group-containing olefin-based resin.

When the stretching during formation of the substrate layer (A) is greater than 3-fold in terms of stretching ratio in a uniaxial direction, the substrate layer (A) preferably contains the thermoplastic resin at 75% by mass or greater, and more preferably 80% by mass or greater, from the perspective of stability upon stretching. Furthermore, when the stretching during formation of the substrate layer (A) is 3-fold or less in terms of stretching ratio in a uniaxial direction, the substrate layer (A) preferably contains the thermoplastic resin at 20% by mass or greater, and more preferably 30% by mass or greater. On the other hand, from the perspectives of enhancing opacity or whiteness of the substrate layer (A), the substrate layer (A) preferably contains the thermoplastic resin at 99% by mass or less, and more preferably 95% by mass or less.

Inorganic fine powder

In addition to the thermoplastic resin, the substrate layer (A) preferably contains inorganic fine powder. Due to the inorganic fine powder contained in the substrate layer (A), it is possible to increase whiteness, to achieve opacification, and to enhance visibility of print provided on the label.

The particle size of the inorganic fine powder is described in terms of volume average particle size measured by a laser diffraction method, and the volume average particle size is preferably 0.01 $\mu$m or greater, and more preferably 0.1 $\mu$m or greater, from the perspective of making the substrate layer (A) white and opaque. On the other hand, the volume average particle size described above is preferably 15 $\mu$m or less, and more preferably 5 $\mu$m or less, from the perspective of making the appearance of the thermoplastic resin film surface excellent.

Examples of types of the inorganic fine powder used in the substrate include calcium carbonate, calcined clay, silica, diatomaceous earth, kaolin, talc, titanium oxide, barium sulfate, alumina, zeolite, mica, sericite, bentonite, sepiolite, vermiculite, dolomite, wollastonite, glass fibers, and the like. Among these, from the perspectives of whitening, opacification, and resin formability, calcium carbonate, talc, and titanium oxide are preferable, and calcium carbonate and titanium oxide are more preferable.

The surface of the inorganic fine powder may be subjected to hydrophilization treatment or hydrophobization treatment in advance. By these surface treatments, printability, coatability, friction resistance, secondary processability, or other various characteristics can be imparted to the substrate layer (A).

From the perspectives of enhancing opacity or whiteness of the substrate layer (A), the substrate layer (A) preferably contains the inorganic fine powder at 1% by mass or greater, and more preferably 5% by mass or greater. On the other hand, when the stretching is greater than 3-fold in terms of stretching ratio in a uniaxial direction, the substrate layer (A) preferably contains the inorganic fine powder at 25% by mass or less, and more preferably 20% by mass or less, from the perspective of enhancing stability upon stretching during the formation of the substrate layer (A). Furthermore, when the stretching during formation of the substrate layer (A) is 3-fold or less in terms of stretching ratio in a uniaxial direction, the substrate layer (A) preferably contains the inorganic fine powder at 80% by mass or less, and more preferably 70% by mass or less.

Other components

In the present invention, the substrate layer (A) may contain, as necessary, an organic filler, heat stabilizer (antioxidant), photostabilizer, dispersing agent, lubricant, antistatic agent, or the like.

When the substrate layer (A) contains an organic filler, the organic filler is preferably contained at 0.01% by mass or greater from the perspective of exhibiting functions of the organic filler. On the other hand, the organic filler is preferably contained at 20% by mass or less, and more preferably contained at 10% by mass or less, from the perspective of making the appearance of the thermoplastic resin film excellent.

As the organic filler, another type of resin that is different from the thermoplastic resin of the main component of the substrate layer (A) is preferably selected. In particular, a resin having higher melting point or glass transition point than that of the thermoplastic resin of the main component is more preferably selected.

For example, when the thermoplastic resin of the main component of the substrate layer (A) is a polyolefin-based resin (melting point: 80 to 160°C), the melting point of the organic filler is preferably from 170 to 300°C, and the glass transition point of the organic filler is preferably from 170 to 280°C. Examples of the organic filler having such a melting point or glass transition point include polyethylene terephthalate, polybutylene terephthalate, polycarbonate, nylon-6, nylon-6,6, and the like.

On the other hand, as the organic filler, a resin that is not compatible with the thermoplastic resin of the main component of the substrate layer (A) is more preferably selected. When the thermoplastic resin of the main component of the substrate layer (A) is a polyolefin-based resin, the organic filler is exemplified by polystyrene, polymethylmethacrylate, and the like in addition to the resins described above. When the thermoplastic resin of the main component of the substrate layer (A) is a propylene-based resin, the organic filler is exemplified by high density polyethylene, low density polyethylene, cyclic polyolefin, and the like in addition to the resins described above.

When the substrate layer (A) contains a heat stabilizer, the heat stabilizer is preferably contained at 0.001% by mass or greater from the perspective of exhibiting functions of the heat stabilizer. On the other hand, the heat stabilizer is preferably contained at 1% by mass or less, and more preferably contained at 0.5% by mass or less, from the perspective of making the appearance of the thermoplastic resin film excellent and from the perspective of economic efficiency. As the heat stabilizer, one type or two or more types selected from typically known hindered phenol-based, phosphorus-based, amine-based, or similar heat stabilizers (antioxidants) may be appropriately used.

When the substrate layer (A) contains a photostabilizer, the photostabilizer is preferably contained at 0.001% by mass or greater from the perspective of exhibiting functions of the photostabilizer. On the other hand, the photostabilizer is preferably contained at 1% by mass or less, and more preferably contained at 0.5% by mass or less, from the perspective of making the appearance of the thermoplastic resin film excellent and from the perspective of economic efficiency. As the photostabilizer, one type or two or more types selected from typically known hindered amine-based, benzotriazole-based, benzophenone-based, or similar photostabilizers may be appropriately used. Furthermore, use of a combination of the photostabilizer and the heat stabilizer described above is also preferable.

When the substrate layer (A) contains a dispersing agent or lubricant, the dispersing agent or lubricant is preferably contained at 0.01% by mass or greater from the perspective of exhibiting functions of the dispersing agent or lubricant. On the other hand, the dispersing agent or lubricant is preferably contained at 4% by mass or less, and more preferably contained at 2% by mass or less, from the perspective of making the formability and/or printability of the thermoplastic resin film excellent. As the dispersing agent or lubricant, one type or two or more types selected from the group consisting of typically known silane coupling agents; fatty acids having from 8 to 24 carbons, such as oleic acid and stearic acid, and those metal salts, those amides, those esters with alcohol having from 1 to 6 carbons, and the like; poly(meth)acrylic acids and metal salts thereof may be appropriately used.

When the substrate layer (A) contains an antistatic agent, the antistatic agent is preferably contained at 0.5% by mass or greater, and more preferably contained at 1% by mass or greater, from the perspective of exhibiting functions of the antistatic agent. On the other hand, the antistatic agent is preferably contained at 10% by mass or less, and more preferably contained at 5% by mass or less, from the perspective of making the formability and/or printability of the thermoplastic resin film excellent. As the antistatic agent, one type or two or more types selected from the group consisting of typically known silane coupling agents; fatty acids having from 8 to 24 carbons, such as oleic acid and stearic acid, and those metal salts, those amides, those esters with alcohol having from 1 to 6 carbons, and the like; poly(meth)acrylic acids and metal salts thereof may be appropriately used.

Heat seal layer (B)

In an embodiment, the thermoplastic resin film comprises at least a front face, a substrate layer (A) containing a thermoplastic resin, heat seal layer (B), and a back face in this order. In the present embodiment, the thermoplastic resin film has the surface coating layer on the front face side. According to the present embodiment, a thermoplastic resin film suitable for in-mold molding can be provided. The heat seal layer (B) has a function to adhere a label for molding to a container, such as a plastic container, when the label for molding is adhered to the container by in-mold molding. The heat seal layer (B) is formed from, for example, a resin composition containing, as a main component, a thermoplastic resin having a melting point that is lower than the melting point of the resin composition constituting the substrate layer (A).

The difference between the melting point of the thermoplastic resin of the main component of the heat seal layer (B) and the melting point of the resin composition constituting the substrate layer (A) is preferably 10°C or higher, and more preferably 15°C or higher. By this, deformation of the substrate layer (A) can be suppressed when the label for molding is adhered to a plastic container. On the other hand, the difference between the melting point of the thermoplastic resin of the main component of the heat seal layer (B) and the melting point of the resin composition constituting the substrate layer (A) is preferably 150°C or lower. By this, blocking of the label for molding can be suppressed when the label for molding is stored before adhering to a plastic container or when the label for molding is processed. As a result, handleability of the label for molding is enhanced.

Specific examples of the thermoplastic resin used in the heat seal layer (B) include ultra low density-, low density-, or medium density-high pressure produced polyethylene, straight-chain low density polyethylene, ethylene/vinyl acetate copolymers, ethylene/acrylic acid copolymers, ethylene/alkylacrylate polymers in which alkyl groups have from 1 to 8 carbons, ethylene/alkylmethacrylate copolymers in which alkyl groups have from 1 to 8 carbons, propylene-based resins represented by propylene/$\alpha$-olefin copolymers, polyester-based resins, styrene-based elastomer resins, polyamide-based resins, and the like. As the thermoplastic resin used in the heat seal layer (B) is preferably straight-chain low density polyethylene, and more preferably straight-chain low density polyethylene formed by using metallocene as a polymerization catalyst. By this, an adhesive layer having excellent heat seal strength can be obtained.

Publicly known other additives for resin may be optionally added to the heat seal layer (B) in the range that does not impair heat sealability. Examples of the other additives for resin include a dye, nucleating agent, plasticizer, releasing agent, flame retardant, antioxidant, photostabilizer, ultraviolet absorbing agent, and the like. By adding antistatic agent as an additive, the surface resistivity on the back face of the thermoplastic resin film can be lowered. In this case, a substance having a tertiary amino group is preferably added as the antistatic agent, and a substance having an N,N-dimethylamino group or N,N-diethylamino group is preferably added as the antistatic agent. By this, antistatic performance can be imparted to the back face of the thermoplastic resin film without lowering the adhesive strength between the plastic container and the label. The added amount of the other additives for resin is preferably 10% by mass or less, and more preferably 5% by mass or less, relative to the total amount of the heat seal layer (B). By this, a phenomenon in which the additives are deposited on a die when film is produced continuously can be suppressed.

The method of providing the heat seal layer (B) on the thermoplastic resin film is not particularly limited. Examples thereof include a method using a multilayer die method using a feed block, multi-manifold, or the like during extrusion forming; a method in which the heat seal layer (B) is extrusion-laminated on the substrate layer (A) using a plurality of dies; a combination of these method; or the like.

Depending on the coating method, the heat seal layer (B) may be provided on the substrate layer (A) after forming. For example, a coating solution, which is obtained by dissolving raw materials that constitute the heat seal layer (B) (also referred to as "heat seal layer (B) raw materials") in an organic solvent, is coated on one face of the substrate layer (A), and then dried to form the heat seal layer (B) on the substrate layer (A). The heat seal layer (B) may also be formed on the substrate layer (A) by coating an aqueous resin emulsion containing the raw materials that constitute the heat seal layer (B) on one face of the substrate layer (A), and then drying.

The aqueous resin emulsion described above is obtained by methods described in, for example, Japanese Unexamined Patent Application Publication No. S58-118843A, Japanese Unexamined Patent Application Publication No. S56-2149A, Japanese Unexamined Patent Application Publication No. S56-106940A, Japanese Unexamined Patent Application Publication No. S56-157445A, and the like. Specifically, raw materials that constitute the heat seal layer (B) are first supplied to a twin-screw extruder and melt-kneaded. Thereafter, from a liquid feed tube provided in a compression part region or vent region of the extruder, water containing a dispersion is introduced, and the melted copolymer resin and water are kneaded by rotating screws. Thereafter, by rotating the screw in the opposite direction in the housing of the extruder, the obtained kneaded material is discharged to atmospheric pressure region from an outlet nozzle of the extruder. As necessary, water is further added thereto to store the kneaded material in a storage tank.

The average particle size of the heat seal layer (B) raw materials in the aqueous resin emulsion is preferably from 0.01 to 3 $\mu$m, and more preferably from 0.1 to 1 $\mu$m. When the average particle size of the olefin-based resin particles is within the range described above, the phase becomes stable in the state of dispersion, and storability and coatability of the liquid becomes excellent. Furthermore, the heat seal layer (B) formed by coating this dispersion tends to have even more excellent transparency after the obtained film has adhered to a bottle via in-mold molding (i.e. in the state of resin molded product). To set the average particle size within the range described above, a dispersing agent (examples include various surfactants) for dispersing the heat seal layer (B) raw materials may be added.

The average particle size of the heat seal layer (B) raw materials in the aqueous resin emulsion is calculated by the following procedure. First, a sample solution (e.g. olefin-based resin emulsion solution) is dried at low temperature under reduced pressure conditions. This dried sample is magnified to an appropriate magnification (e.g. magnifying power of 1,000) using a scanning electron microscope to take a photographic image. From the obtained image, the average value of particle sizes (major axis) of randomly chosen 100 particles in the sample is calculated. By this, the average particle size is calculated.

The solid concentration of the heat seal layer (B) raw materials in the aqueous resin emulsion is preferably from 8 to 60% by mass, and more preferably from 20 to 50% by mass. When the solid concentration is within the range described above, the phase becomes stable in the state of dispersion, and storability and coatability of the liquid becomes excellent.

Strengthening layer (C)

In another embodiment, the thermoplastic resin film comprises at least a front face, a substrate layer (A), a strengthening layer (C), and a back face in this order. The thermoplastic resin film may have a surface coating layer on the front face side of the thermoplastic resin film. According to the present embodiment, a thermoplastic resin film that is suitable for adhering to an external object can be provided. The strengthening layer (C) has a function of firmly adhering to an external object when the back face side of the thermoplastic resin film is adhered to the external object.

The resin constituting the strengthening layer (C) may be a resin that is the same as or different from the resin contained in the substrate layer (A). The resin constituting the strengthening layer (C) is preferably a thermoplastic resin having a melting point in a range of 105 to 280°C. The thermoplastic resin having a melting point in a range of 105 to 280°C may be selected from propylene-based resins, high density polyethylene, polyethylene terephthalate resins, or the like. The thermoplastic resin having a melting point in a range of 105 to 280°C may contain two or more types of resins. The resin constituting the strengthening layer (C) may contain a propylene-based resin or high density polyethylene as a main component. By this, a strengthening layer (C) having excellent water resistance, chemical resistance, economic efficiency, and the like can be obtained.

The strengthening layer (C) may contain inorganic fine powder. When the strengthening layer (C) contains inorganic fine powder, the content of the inorganic fine powder in the substrate layer (A) is preferably greater than the content of the inorganic fine powder in the strengthening layer (C). By this, the density of the substrate layer (A) can be made smaller than the density of the strengthening layer (C). As a result, while the whiteness or opacity of the thermoplastic resin film is increased or while the mass of the thermoplastic resin film is reduced, strength within the layer of the strengthening layer (C) as well as interlaminar strength between the substrate layer (A) and the strengthening layer (C) can be enhanced. Furthermore, the thermoplastic resin film and the external object can be firmly adhered. The inorganic fine powder contained in the strengthening layer (C) may be inorganic fine powder that is the same as or different from the inorganic fine powder contained in the substrate layer (A).

The strengthening layer (C) preferably contains the inorganic fine powder at 1% by mass or greater, and more preferably 5% by mass or greater. By this, opacity of the strengthening layer (C) can be made high. The strengthening layer (C) preferably contains the inorganic fine powder at 20% by mass or less, and more preferably 18% by mass or less. By this, the strength within the layer of the strengthening layer (C) as well as interlaminar strength between the substrate layer (A) and the strengthening layer (C) can be enhanced.

Publicly known other additives for resin may be optionally added to the strengthening layer (C) in the range that does not impair adhesion to an external object. Examples of the other additives for resin include a dye, nucleating agent, plasticizer, releasing agent, flame retardant, antioxidant, photostabilizer, ultraviolet absorbing agent, and the like. The added amount of the other additives for resin is preferably 10% by mass or less, and more preferably 5% by mass or less, relative to the total amount of the strengthening layer (C). By this, a phenomenon in which the additives are deposited on a die when film is produced continuously can be suppressed.

The method of producing the film containing the strengthening layer (C) is not particularly limited, and the film may be produced by the similar method as that for a film containing the heat seal layer (B). For example, the film may be produced by extruding the surface layer from a die simultaneously with the molding of the substrate layer (A), may be produced by extrusion-laminating the strengthening layer (C) on the substrate layer (A) using a plurality of dies, or may be produced by adhering the strengthening layer (C) that has been formed into a film shape to the substrate layer (A).

Highly smooth layer (D)

In another embodiment, the thermoplastic resin film comprises at least a front face, a highly smooth layer (D), a substrate layer (A), and a back face in this order. The thermoplastic resin film may have a surface coating layer on the front face side of the thermoplastic resin film. According to the present embodiment, a thermoplastic resin film that is suitable for exhibiting glossiness on its surface can be provided. The highly smooth layer (D) has a function of enhancing glossiness of the front face of the thermoplastic resin film. By this, when the front face of the thermoplastic resin film is printed with information, it is possible to give glossy appearance to the printed information. By allowing incident light that has entered within the thermoplastic resin film to be specularly reflected at an interface between the substrate layer (A) and the highly smooth layer (D), glossiness can be even further efficiently enhanced.

The highly smooth layer (D) contains from 70 to 100% by mass, or more preferably from 75 to 100% by mass, of a thermoplastic resin. Furthermore, the highly smooth layer (D) contains from 0 to 30% by mass, or more preferably from 0 to 25% by mass, of at least one of inorganic fine powder or organic filler. By this, smoothness of the surface is made high, and glossiness at 20° (JIS Z8741) can be enhanced. The glossiness at 20° is measured in accordance with the procedure stipulated in JIS Z8741. Furthermore, the opacity of the highly smooth layer (D) is preferably 30% or less. By this, transparency of the highly smooth layer (D) is made high, and incident light that has entered within the thermoplastic resin film can be efficiently extracted. As a result, total light reflectance can be enhanced.

The highly smooth layer (D) is preferably stretched. By this, when the highly smooth layer (D) contains at least one of inorganic fine powder or organic filler, voids formed by using the inorganic fine powder or organic filler as the cores are formed inside the highly smooth layer (D). As a result, total light reflectance can be enhanced. Furthermore, by the stretching, surface smoothness of the highly smooth layer (D) is enhanced. As a result, glossiness at 20° is enhanced. When the highly smooth layer (D) does not contain at least one of inorganic fine powder or organic filler, the surface smoothness of the highly smooth layer (D) is even further enhanced by the stretching.

When enhancement of the glossiness is intended, the stretching of the highly smooth layer (D) is more preferably performed in the biaxial direction. When the stretching of the highly smooth layer (D) is a uniaxial stretching, the voids in the highly smooth layer (D) become a rugby-ball shape, and the light reflection in the highly smooth layer (D) exhibits less directivity relative to the incident light and results in so-called diffused reflection. As a result, although the brightness is enhanced, the glossiness is suppressed. On the other hand, when the stretching of the highly smooth layer (D) is a biaxial stretching, the voids in the highly smooth layer (D) becomes more flat disk shape, thereby increasing the proportion of specular reflection occurred in the light reflection on the highly smooth layer (D). As a result, glossiness by visual observation is enhanced.

Method of producing thermoplastic resin film

Forming of sheet

The thermoplastic resin film may be an unstretched film or stretched film. The forming of the thermoplastic resin film is preferably performed by extrusion forming. Examples of the method of forming the thermoplastic resin film include, after film raw materials are melt-kneaded by an extruder set at a temperature that is higher than the melting point or the glass transition point of the thermoplastic resin constituting the thermoplastic resin film, cast forming in which the raw materials are extruded in a sheet shape using a T-die, I-die, or the like, and cooled using a metal roll, rubber roll, metal belt, or the like; inflation forming in which the raw materials are extruded in a tube shape using a circular die, and cooled with air or water while inflated to a certain proportion using internal pressure of the tube; calender forming in which the kneaded raw materials are rolled into a sheet shape using a plurality of heat roll; roll forming; or the like.

The thermoplastic resin film is preferably formed by a calender forming method or cast forming method. According to the calender forming method, the thermoplastic resin composition constituting the thermoplastic resin film is extruded from a space in between two rolls while the thermoplastic resin composition is kneaded by heated rolls, and rolling of the thermoplastic resin composition is repeated in between two rolls. The thermoplastic resin film can be obtained by pressing the thermoplastic resin film to a cooling roll to cool while the thickness of the thermoplastic resin film is controlled by controlling the rotating speed and drawing speed of each of the rolls. According to the cast forming method, the thermoplastic resin composition constituting the thermoplastic resin film is supplied to an extruder and melted, then the thermoplastic resin composition is extruded in a sheet shape using a T-die that is connected to the extruder, and then the extruded thermoplastic resin composition is cooled by pressing to a cooling roll to obtain the thermoplastic resin film.

When the thermoplastic resin film is formed in a multilayer structure, publicly known methods can be appropriately used; however, specific examples include multilayer die methods using a feed block, multi-manifold, or the like, extrusion lamination methods using a plurality of dies, and the like. Both of these may be used as a single method or used in combination. For example, the thermoplastic resin film may be a laminate obtained by, after one layer of the thermoplastic resin film is formed by the cast forming described above and as necessary stretched utilizing the difference in circumferential speeds of rolls or after one layer of the thermoplastic resin film is obtained by the calender forming method described above, melt-laminating a resin composition constituting another layer of the thermoplastic resin film.

Stretching

The thermoplastic resin film may have a multilayer structure including two or more layers. When any of the layers constituting the thermoplastic resin film is stretched, the method of stretching is not particularly limited, and publicly known various methods can be used. Specifically, stretching of each of the layers may be uniaxial stretching or biaxial stretching, or each of the layers may be unstretched. Furthermore, the direction of the stretching may be in the machine direction or the transverse direction. Furthermore, in the case of the biaxial stretching, the stretching may be performed simultaneously or successively.

When a cast formed film is stretched, examples of the stretching method include a machine-direction stretching method utilizing the difference in the circumferential speeds among a group of rollers, a transverse-direction stretching method using a tenter oven, a rolling method, a simultaneous biaxial stretching method by a combination of a tenter oven and a linear motor, and the like. Furthermore, when an inflation film is stretched, simultaneous biaxial stretching method by a tubular method can be used.

The stretching conditions of the thermoplastic resin film are not particularly limited and are appropriately selected taking the characteristics of the thermoplastic resin to be used or the like into consideration. For example, in the case where a propylene homopolymer or a copolymer thereof is used as the thermoplastic resin, when the stretching is performed in one direction, the stretching ratio is approximately from 1.2 to 12 times, and preferably from 2 to 10 times. Furthermore, when the stretching is biaxial stretching, the area ratio is from 1.5 to 60 times, and preferably from 4 to 50 times. In the case where an ethylene-based resin is used as the thermoplastic resin and 45% or greater of inorganic fine powder is contained, when the stretching is performed in one direction, the stretching ratio is approximately from 1.2 to 5 times, and preferably from 2 to 4 times. Furthermore, when the stretching is biaxial stretching, the area ratio is from 1.5 to 15 times, and preferably from 2 to 10 times. In the case where another thermoplastic resin is used, when the stretching is performed in one direction, the stretching ratio is from 1.2 to 10 times, and preferably from 2 to 5 times, and when the stretching is biaxial stretching, the area ratio is from 1.5 to 20 times, and preferably from 4 to 12 times.

The stretching temperature may be within a publicly known temperature range favorable for thermoplastic resins, from not lower than the glass transition temperature to not higher than the melting point of the crystal portion. Specifically, when the thermoplastic resin is a propylene homopolymer (melting point: 155 to 167°C), the stretching temperature is from 100 to 164°C. Furthermore, when the thermoplastic resin is high density polyethylene (melting point: 121 to 134°C), the stretching temperature is from 70 to 133°C and is from 1 to 70°C lower than the melting point. Furthermore, for polyethylene terephthalate (melting point: 246 to 252°C), a temperature that inhibits rapid crystallization is selected. Furthermore, the stretching rate is preferably from 20 to 350 m/min.

Furthermore, heat treatment is preferably performed after the stretching. The temperature of the heat treatment is preferably not lower than the stretching temperature but not higher than a temperature that is 30°C higher than the stretching temperature. By performing the heat treatment, thermal shrinkage in the stretching direction is lowered, and winding and tightening of a product during storage and/or waviness or the like due to shrinkage by heat and shrinkage during fusion sealing can be reduced. The method of heat treatment typically uses a roll or heat oven, and combination of these may be performed. From the perspective of obtaining high treatment effect, the heat treatment is preferably performed in conditions where the stretched film is kept under tension.

Surface treatment

Since the film formed from the thermoplastic resin obtained as described above has a hydrophobic surface and tends to repel a coating agent, the film surface is preferably subjected to oxidation treatment. By performing the oxidation treatment on the film surface, it is possible to firmly adhere the surface coating layer and the film as well as to facilitate uniform coating of the coating agent on the film surface. As a result, adhesion between the film and printing ink or various functional material layers that are formed in a post-processing step (e.g. thermosensitive color developing layer, inkjet receiving layer, adhesive layer, and dry laminate layer) can be enhanced.

Examples of the surface oxidation treatment include corona discharge treatment, flame treatment, plasma treatment, glow discharge treatment, ozone treatment, and the like. Among these, corona discharge treatment and plasma treatment are preferably used.

In the case of corona discharge treatment, the amount of the oxidation treatment is preferably 10 W·min/m$^2$ (600 J/m$^2$) or greater, and more preferably 20 W·min/m$^2$ (1,200 J/m$^2$) or greater. By setting the amount to 20 W·min/m$^2$ (1,200 J/m$^2$) or greater, stable and effective oxidation treatment can be performed. Furthermore, in the case of corona discharge treatment, the amount of the oxidation treatment is preferably 200 W·min/m$^2$ (12,000 J/m$^2$) or less, and more preferably 180 W·min/m$^2$ (10,800 J/m$^2$) or less.

Coating method

The surface coating layer is formed by, for example, coating and drying the coating agent on the surface of the thermoplastic resin film. Examples of the method of coating the coating agent include coating by a die coater, roll coater, gravure coater, spray coater, blade coater, reverse coater, air-knife coater, size press coater, or the like, by dipping, or the like.

The coating agent is coated on at least one surface of the thermoplastic resin film. The coating agent may be coated on the both surfaces of the thermoplastic resin film. By this, antistatic performance can be even further enhanced.

The coating process may be performed together with the forming of the thermoplastic resin film in a forming line of the thermoplastic resin film, or the coating process may be performed in another line that is separate from the forming line of the thermoplastic resin film and performed to the thermoplastic resin film formed in the forming line. Furthermore, when the forming of the support described above is performed by a stretching method, the coating may be performed prior to the stretching step or after the stretching step. As necessary, excess solvent may be removed by a drying step using an oven or the like to form the surface treated layer.

Coated amount D

When the thickness of the surface coating layer of the thermoplastic resin film is too large, the components in the surface coating layer may cause cohesive failure within the surface coating layer. As a result, adhesion between the thermoplastic resin film and ink (or printing ink) or a functional material layer coating solution (examples thereof include thermosensitive coating solution and the like) may be lowered. Therefore, the applied amount of the surface treated layer to the thermoplastic resin film (also referred to as "coated amount D" or "DRY coated amount"), in terms of solid content after drying per unit area (square meter) is preferably 20 $g/m^2$ or less, more preferably 5 $g/m^2$ or less, and particularly preferably 3 $g/m^2$ or less. The coated amount D may be 1 $g/m^2$ or less.

On the other hand, when the thickness of the surface coating layer formed by the coating is too small, the components of the surface coating layer cannot exist uniformly in the surface of the thermoplastic resin film, and it may be made difficult to obtain sufficient surface treatment effect (suppression of static charge half-life period S), or the adhesion between the thermoplastic resin film and ink (or printing ink) or the coating agent, such as a thermosensitive coating agent, may be insufficient. Therefore, the coated amount D is preferably 0.07 $g/m^2$ or greater, more preferably 0.1 $g/m^2$ or greater, and particularly preferably 0.15 $g/m^2$ or greater.

Note that the coated amount D of the surface coating layer is determined by calculating a wet coated amount by subtracting a film mass prior to coating of the coating agent from a wet film mass immediately after the coating of the coating agent to the film, and then multiplying the solid concentration of the coating agent to the wet coated amount, to obtain the coated amount D after drying. However, when there are no other means, the coated amount D after drying may be directly determined by peeling off the surface coating layer from the thermoplastic resin film and measuring the mass of the surface coating layer, or the coated amount D after drying may be calculated by determining the thickness of the surface coating layer by observing the cross section of a sample using a scanning electron microscope, and then by multiplying the density of the solid content of the coating agent to the thickness.

Properties of thermoplastic resin film

Thickness

The thickness of the thermoplastic resin film is measured using a constant pressured thickness measurement instrument in accordance with JIS K 7130:1999. The thickness of the thermoplastic resin film is preferably 20 $\mu$m or greater, more preferably 40 $\mu$m or greater, and even more preferably 60 $\mu$m or greater, from the perspectives of making it difficult to form wrinkles on the label or facilitating fixing of a label to a proper position when the label is inserted to a mold using a label inserter, when the thermoplastic resin film is adhered to a hollow resin container via in-mold molding. On the other hand, the thickness of the thermoplastic resin film is preferably 250 $\mu$m or less, and more preferably 200 $\mu$m or less, from the perspective of enhancing drop-resistant strength of the molded product without causing voids and thin portions in between the label and the hollow molded container or from the perspective of reducing processing costs of the mold.

When the thermoplastic resin film comprises a heat seal layer (B), the thickness of the thermoplastic resin film is preferably 0.1 $\mu$m or greater, and more preferably 0.5 $\mu$m or greater, from the perspective of achieving sufficient adhesion to a resin molded product. On the other hand, the thickness of the thermoplastic resin film is preferably 20 $\mu$m or less, and more preferably 10 $\mu$m or less, from the perspective of suppressing curling of a label for molding when the label is inserted to a mold and/or when offset printing is performed using a sheet shaped label.

Density

The density of the thermoplastic resin film is calculated by the following formula using a thickness value obtained by the measurement described above and a basis weight value obtained by measuring the mass of a sample obtained by punching out in a 10 cm $\times$ 10 cm size, in accordance with the method described in JIS K7112:1999.

$$\rho = Wf / Tf$$

However, "$\rho$", "Wf", and "Tf" are as described below.

EP 3 064 539 B1

ρ: Density of thermoplastic resin film (g/cm$^3$)
Wf: Basis weight of thermoplastic resin film (g/cm$^2$)
Tf: Thickness of thermoplastic resin film (cm)

The density of the thermoplastic resin film is preferably 0.5 g/cm$^3$ or greater, and more preferably 0.6 g/cm$^3$ or greater, from the perspective of maintaining strength of the label surface. On the other hand, the density of the thermoplastic resin film is preferably 1.3 g/cm$^3$ or less, and more preferably 1.0 g/cm$^3$ or less, from the perspective of imparting heat sealing strength.

Porosity

The porosity of the thermoplastic resin film is calculated by the following formula using the density ρ obtained by the measurement described above and the true density $\rho_0$ obtained by density measurement of the resin composition used in the sheet formation of the film.

$$\text{Porosity } (\%) = (\rho_0 - \rho) / \rho_0$$

However, "$\rho_0$" and "p" are as described below.

$\rho_0$: True density of thermoplastic resin film
ρ: Density of thermoplastic resin film

The porosity of the thermoplastic resin film is preferably 1% or greater, and more preferably 10% or greater, from the perspective of imparting heat sealing strength. On the other hand, the porosity of the thermoplastic resin film is preferably 60% or less, and more preferably 50% or less, from the perspective of maintaining strength of the surface.

Static charge half-life period S

The static charge half-life period S, at 23°C and relative humidity of 30%, of the face on which the surface coating is applied is measured by the method described in JIS L 1094:1997. From the perspective of antistatic performance of the thermoplastic resin film, the static charge half-life period S is preferably 300 seconds or shorter, more preferably 200 seconds or shorter, and even more preferably 100 seconds or shorter. When the static charge half-life period S exceeds 300 seconds, troubles involving static electricity during printing and troubles such as sending two sheets of label at a time when a label is inserted during hollow molding tend to occur.

Water contact angle H

The water contact angle H of the face on which the surface coating is applied is measured by a static water contact angle measurement method. Since printing failure due to emulsification tends to occur during offset printing when the water contact angle H is less than 65°, the water contact angle H is preferably 65° or higher, more preferably 70° or higher, and even more preferably 75° or higher. On the other hand, from the perspectives of exhibiting antistatic performance, ease in post-processing, and the like, the water contact angle H is preferably 120° or lower, more preferably 110° or lower, and even more preferably 100° or lower.

Proportion of redissolution C of surface coating agent to water

In the thermoplastic resin film, the proportion of redissolution C of the surface coating agent to water is preferably 5% or less, and more preferably 1.5% or less. The proportion of redissolution C of the surface coating agent to water is calculated by placing the solid component obtained by hot-air-drying the surface coating agent into ion exchange water to obtain a solid component that does not dissolve in water (also referred to as "water-insoluble component"), and then by calculating the mass reduction ratio before and after placing the solid component in the ion exchange water as the proportion of redissolution C. A lower proportion of redissolution C of the surface coating agent to water indicates higher water resistance of the thermoplastic resin film, and thus water resistance of the printed material on the surface of the thermoplastic resin film is also enhanced.

Film for printing

Printing method

Using the thermoplastic resin film described above, a film for printing may be produced. The thermoplastic resin film can be directly printed by gravure printing, flexographic printing, letter press printing, screen printing, melt thermal transfer printing methods, UV curable inkjet methods, electrophotographic recording methods, or the like. Furthermore, for direct thermal printing methods, water-based dye inkjet methods, water-based pigment inkjet methods, solvent-based inkjet methods, liquid toner methods, and the like, printing is made possible by providing a recording layer (F) described below that is suitable for each of the printing methods, on the surface. An anchor layer may be provided for enhancing durability of the printed information printed by a melt thermal transfer printing method, UV curable offset method, UV curable inkjet method, or electrophotography method described above, or the like. In this case, the anchor layer corresponds to a recording layer (F). From the perspective of achieving high definition of the printing, gravure printing, inkjet recording methods, and electrophotographic recording methods are preferable. From the perspective of capability of printing in small lots, letter press printing and flexographic printing are preferable.

When wettability with water on the surface coating layer is too good, offset printing may not be suitable depending on pattern since emulsification of ink tends to occur, thereby making it difficult to transfer ink. On the other hand, when the wettability with water on the surface coating layer is too poor, ink may adhere to a non-printed part of the offset printing and may cause scumming. Therefore, by controlling the above-described water contact angle H of the face on which the surface coating is applied to be in a suitable range, offset printing can be improved.

Although oil-based inks and UV curable inks can be used, the ink used in these printings is preferably a UV curable ink from the perspectives of friction resistance and settability (drying property) after printing. When the printing is performed using a UV curable ink, the ink is dried and solidified by UV radiation. The UV radiation method is not particularly limited as long as the method cures the UV curable ink; however, examples thereof include irradiating with UV from a metal halide lamp (200 to 400 nm), low-pressure mercury lamp (180 to 250 nm), high-pressure mercury lamp (250 to 365 nm), black light (350 to 360 nm), or UV-LED lamp (355 to 375 nm), in a manner that the radiation dose is from 300 to 3000 mJ/cm$^2$, and preferably from 400 to 1000 mJ/cm2.

It is known that affinity between the surface of the thermoplastic resin film and the printing ink typically tends to be lowered as time elapses, and such lowering of the affinity is accelerated by heat, moisture in the air, and the like. It is conceived that this is because various additives contained in the thermoplastic resin film deposit on the surface and/or hydrophilic groups that have been generated by the surface treatment of the film disappear. Note that various additives are often hydrophobic. Furthermore, when the surface treatment is performed on the thermoplastic resin film surface by using a polymer-type surface coating agent that has high affinity with ink, it is also conceived that this is because of deterioration of the polymer-type surface coating agent.

On the other hand, the thermoplastic resin film described above has a surface coating layer having high durability, derived from metal oxide-containing microparticles and a dispersion of an organic polymer in a solvent on the surface. By this, it is conceived that fluctuations of the water contact angle H in the surface coating layer are small and thus the effect of maintaining affinity to printing ink can be achieved.

Recording layer (F)

When information is printed on the thermoplastic resin film, a recording layer (F) may be provided on the surface coating layer that is provided on a front face side of the thermoplastic resin film. As the recording layer (F), an appropriate layer is selected based on the printing method. Examples of the printing method include direct thermal printing methods, water-based dye inkjet methods, water-based pigment inkjet methods, solvent-based inkjet methods, liquid toner methods, and the like. Depending on the printing method, a recording layer (F) may be also provided on the back face side of the thermoplastic resin film. The type of the recording layer (F) on the back face side may be the same as or different from the recording layer (F) on the front face side. The recording layer (F) may serve as a layer containing a color developing material therein or as a layer that receives and fixes the coloring material from outside. By this, variable information can be appropriately provided.

Examples of the recording layer (F) suitable for a direct thermal printing method include layers containing at least a color former and a color developer. The combination of the color former and the color developer is not particularly limited as long as the combination causes a color developing reaction when the color former and the color developer are brought into contact. Examples of the combination of the color former and the color developer include combinations of a colorless or pale white basic dye and an inorganic or organic acidic substance, combinations of a higher fatty acid metal salt, such as ferric stearate, and a phenol, such as gallic acid, combinations of a diazonium salt compound, a coupler and a basic substance; and the like. The diazonium salt compound described above may be contained in a microcapsule having a polyurea resin, urethane resin, or gelatin as its shell. The recording layer (F) suitable for a direct thermal printing method may further contain various additives, such as a binder, color adjusting agent, fluorescent brightening agent, lubricant, and curing agent.

The method of forming the recording layer (F) suitable for a direct thermal printing method is not particularly limited. Examples of the method of forming the recording layer (F) suitable for a direct thermal printing method include dry lamination methods, extrusion lamination, wet lamination methods, coating methods, and the like. The recording layer (F) suitable for a direct thermal printing method may be formed by a coating method. Examples of the method of coating a coating solution of the thermosensitive recording layer in the recording layer (F) include coating methods using a roll coater, blade coater, bar coater, air-knife coater, gravure coater, reverse coater, die coater, lip coater, spray coater, comma coater, size press, gate roll, and the like. The coated amount of the recording layer (F) suitable for a direct thermal printing method is not particularly limited. The solid content mass of the coated amount described above is preferably 1 $g/m^2$ or greater, and more preferably 2 $g/m^2$ or greater. In the recording layer (F), the coated amount of the thermosensitive recording layer is preferably 30 $g/m^2$ or less, and more preferably 10 $g/m^2$ or less. Note that various publicly known technologies in the field of producing thermosensitive recording paper can be added as necessary. For example, the recording layer (F) suitable for a direct thermal printing method may be protected by further providing an overcoat layer on the recording layer (F) suitable for a direct thermal printing method.

Examples of the recording layer (F) suitable for a water-based dye inkjet method and water-based pigment inkjet method include cationic layers containing at least an inorganic pigment and a binding agent for the inorganic pigment. When the inorganic pigment is cationic, the inorganic pigment can adsorb dyes. On the other hand, when the inorganic pigment is anionic or nonionic, the inorganic pigment cannot adsorb dyes, and the dyes may transfer within the recording layer (F). Therefore, the image may be blurred as time elapses. This bleeding of the image becomes more remarkable as the temperature is higher and the humidity is higher. Therefore, the recording layer (F) suitable for a water-based dye inkjet method and water-based pigment inkjet method may contain a cationic raw material in addition to the inorganic pigment and the binding agent for the inorganic pigment. Because of this, the recording layer (F) can be a cationic layer.

Examples of the inorganic pigment include silica, alumina, and the like. The inorganic pigment may contain amorphous silica, silica formed by a vapor phase method, or alumina formed by a vapor phase method. By this, transparency of the recording layer (F) can be enhanced. As a result, concealment by the recording layer (F) of a coloring material printed by a water-based dye inkjet method or water-based pigment inkjet method can be suppressed, and thus highly dense vivid images can be obtained. Furthermore, since the pore volume of the inorganic pigment described above is large, even when the film thickness of the recording layer (F) is made smaller, ink can be sufficiently adsorbed. The inorganic pigment may contain alumina on its surface. By this, the inorganic pigment becomes cationic.

Examples of the binding agent for the inorganic pigment include vinyl-base polymers, such as fully saponified polyvinyl alcohol, partially saponified polyvinyl alcohol, polyvinyl acetal, polyvinyl butyral, ethylene-vinyl acetate copolymers, and maleic anhydride copolymers, and derivatives thereof; conjugated diene polymers, such as styrene-butadiene copolymers and methyl methacrylate-butadiene copolymers; (meth)acrylic polymers, such as polymers or copolymers of (meth)acrylate, polymethyl methacrylate, polyacrylamide, and the like, or those modified polymers which containing a functional group such as carboxyl group-, cationic group-, or the like; thermosetting resins, such as melamine resins and urea resins; polyurethane resins; and polymers such as alkyd resins. The binding agent for the inorganic pigment may be a vinyl-based polymer and derivative thereof or a (meth)acrylic polymer.

Examples of the cationic raw material include compounds, such as polyethyleneimine, polyvinyl pyridine, polydialkyl aminoethyl methacrylate, polydialkyl aminoethyl acrylate, polydialkyl aminoethyl methacrylamide, polydialkyl aminoethyl acrylamide, polyepoxyamine, polyamidoamine, dicyandiamide-formalin condensates, dicyandiamide polyalkyl-polyalkylene polyamine condensates, salts of diallyldimethylammonium salt polymers, such as polydiallyldimethylammonium chloride, polyvinylamine, polyallylamine, polyallylamine salts, polyvinylamine salts, poly(oxyethyl-1-methylene)amine salts, polyvinylbenzylamine salts, polyacrylamide propylmethylamine salts, polydiallylamine salts, acrylamide/diallylamine salt copolymers, monoallylamine/diallylamine salt copolymers, polyaminedicyan polymers; modified compounds of these; and the like. The cationic raw material may be a compound having primary to tertiary amine salt and quaternary ammonium salt structure in a molecule.

Examples of the recording layer (F) suitable for enhancing durability of printed information printed by a melt thermal transfer printing method, UV curable offset method, UV curable inkjet method, electrophotography method, or the like include an anchor coat layer containing at least one type selected from polyether urethane, polyester urethane, polyacrylic urethane, acrylate copolymers, polyethyleneimine, polyalkylene polyamide, or the like. The anchor coat layer may contain an antistatic agent. Examples of the antistatic agent include combinations of a polymer having an alkylene oxide group and an alkali metal, combinations of a (meth)acrylic acid copolymer and an alkali metal, polymers containing a quaternary ammonium group, and the like.

The anchor coat layer can be formed by forming a coated film on the surface coating layer provided on the substrate layer (A) using publicly known coating equipment and then drying the coated film. Specific examples of the coating equipment include a die coater, bar coater, comma coater, lip coater, roll coater, curtain coater, gravure coater, spray coater, blade coater, reverse coater, air-knife coater, and the like. The coated amount of the anchor coat layer is, in terms of solid content after the drying, preferably from 0.1 to 20 $g/m^2$, and more preferably from 0.5 to 8 $g/m^2$. When the coated amount is 0.1 $g/m^2$ or greater, durability of printed information printed by a melt thermal transfer printing method, UV curable offset method, UV curable inkjet method, or electrophotography method, or the like tends to be more easily obtained. When the coated amount is 20 $g/m^2$ or less, adhesion of the printed information and water resistance tends to be more easily obtained.

In-mold molding

Using the thermoplastic resin film described above, a label-attached hollow molded container may be produced. At this time, raw materials and molding method of the label-attached hollow molded container are not particularly limited, and publicly known raw materials and molding methods can be used.

Container raw material

As the raw material of a container body of the label-attached hollow molded container, a raw material that is capable of forming a hollow container is used. For example, thermoplastic resin is used. Examples of the thermoplastic resin include polyolefin-based resins, such as polyethylene terephthalate (PET) or copolymers thereof, polypropylene (PP), and polyethylene (PE); polycarbonate resins; and the like. Among these, a polyolefin-based resin is preferably used since the polyolefin-based resin is a resin that can be easily blow-molded. Furthermore, a thermoplastic resin composition containing the thermoplastic resin described above as a main component may also be used.

In-mold molding method

When a label-attached hollow molded container is produced, a label is preferably inserted into a mold and then a thermoplastic resin composition, which is in a state that is ready to be molded in the mold, is injected. In particular, a method in which a preform or a parison formed from such a resin is first produced in a mold and then this is sandwiched by the mold to perform blow molding is preferable. By the blow molding, the label can be adhered to the container at the same time as the formation of the container. By this, a label-attached container can be simply and easily produced in a short period of time while design, weight reduction, and productivity of the container are maintained.

Characteristics of label-attached hollow molded container

The label-attached hollow molded container obtained by the method described above exhibits excellent water resistance of the surface coating layer because of the properties of the thermoplastic resin film. Furthermore, the surface coating layer does not shed when the thermoplastic resin film is in-mold-molded, and thus design is not impaired by printing.

Adhesive film

Using the thermoplastic resin film described above, an adhesive film may be used. An adhesive layer (E) is provided on the back face of the thermoplastic resin film, and thus the back face of the thermoplastic resin film can adhere to an external object via the adhesive layer (E). Meanwhile, since the front face of the thermoplastic resin film has the surface coating layer, the front face of the thermoplastic resin film may be directly printed, or information may be printed by providing a recording layer (F) described below on the front face of the thermoplastic resin film.

Adhesive layer (E)

Examples of the adhesive agent used in the adhesive layer (E) include adhesive agents such as rubber-based adhesive agents, acrylic adhesive agents, and silicone-based adhesive agents, and the like.
Examples of the rubber-based adhesive agent include polyisobutylene rubber, butyl rubber, and mixtures of these, and substances in which a tackifier, such as rosin abietate, terpene-phenol copolymer, and terpene-indene copolymer, is blended into such a rubber-based adhesive agent, and the like.
Examples of the acrylic adhesive agent include substances having a glass transition point of -20°C or lower such as 2-ethylhexylacrylate/n-butyl acrylate copolymers and 2-ethylhexylacrylate/ethyl acrylate/methyl methacrylate copolymers.
Examples of the silicone-based adhesive agent include addition curable adhesive agents which catalyst is a platinum compound or the like, peroxide curable adhesive agents which are cured by benzoyl peroxide or the like, and the like.

Examples of the adhesive agent include adhesive agents having various forms such as solvent type, emulsion type, and hot melt type.

The adhesive layer (E) may be formed by directly coating the adhesive agent on a surface of the substrate layer (A), or may be applied by forming an adhesive layer (E) by coating the adhesive agent on a surface of a release liner described below and then applying this on a surface of the substrate layer (A).

Examples of the coating device for the adhesive agent include a bar coater, blade coater, comma coater, die coater, air-knife coater, gravure coater, lip coater, reverse coater, roll coater, spray coater, and the like.

The adhesive layer is formed by, as necessary, smoothing the coated film of the adhesive agent or the like that is coated by such a coating device and then performing a drying step.

The coated amount of the adhesive agent is not particularly limited; however, the coated amount is, in terms of solid content after the drying, preferably from 3 to 60 $g/m^2$, and more preferably from 10 to 40 $g/m^2$.

Furthermore, when peeling occurs at the adhesive interface between the substrate layer (A) and the adhesive layer (E) due to small adhesive force therebetween, it is preferable to coat an anchor coating agent on the surface of front face side of the substrate layer (A) before the adhesive agent is coated.

Examples of the anchor coating agent include polyurethane, polyisocyanate/polyetherpolyol, polyisocyanate/polyesterpolyol/polyethyleneimine, alkyl titanate, and the like. These anchor coating agents may be, for example, coated on the surface of the substrate layer (A) as a solution in which an anchor coating agent is dissolved in an organic solvent, such as methanol, ethyl acetate, toluene, or hexane, or water.

The coated amount of the anchor coating agent is, in terms of solid content after the drying, preferably from 0.01 to 5 $g/m^2$, and more preferably from 0.02 to 2 $g/m^2$.

Release liner

A release liner is provided as necessary on a surface, which is not in contact with the substrate layer (A), of the adhesive layer to protect the surface of the adhesive layer (E).

As the release liner, wood-free paper or kraft paper can be used as is, or a material which is obtained by subjecting a wood-free paper or kraft paper to calender processing, resin coating, or film lamination, a material which is obtained by subjecting glassine paper, coated paper, a plastic film, or the like to silicone treatment, or the like can be used. Among these, use of a material which is obtained by subjecting a surface to be in contact with an adhesive layer to silicone treatment is preferable from the perspective of achieving excellent releasability from the adhesive layer.

Examples

The present invention will be described more specifically below using preparation examples, sheet forming examples, working examples, comparative examples, and test examples. The materials, used amounts, proportions, operations, and the like described below may be varied as appropriate provided that they do not deviate from the spirit of the present invention. Therefore, the scope of the present invention is not limited by the specific examples given below. Note that "%" written below is "% by mass" unless otherwise noted.

Test Examples

Coated amount D

The coated amount D of the surface coating layer of the thermoplastic resin film obtained in the working examples and comparative examples was determined by, when a coating agent obtained in the preparation example was coated on one surface of a thermoplastic resin film obtained by the sheet forming example, subtracting a mass of the thermoplastic resin film before the coating from a mass of the thermoplastic resin film immediately after the coating to determine the wet coated amount, and then multiplying this to the solid concentration described in Table 2 to obtain the coated amount D after the drying.

Static charge half-life period S

The coated surface of the thermoplastic resin film obtained in the working examples and comparative examples was subjected to a measurement in accordance with the half-life period measurement method stipulated in JIS L 1094:1997, "Testing methods for electrostatic propensity of woven and knitted fabrics", at 23°C and relative humidity of 30% (condition of temperature and relative humidity may also be expressed as "23°C/30%") using a static honestmeter (trade name: TYPE S5109; manufactured by Shishido Electrostatic, Ltd.). At this time, the measurement time period after the voltage application was stopped was for 300 seconds, and thus the static charge half-life period S (sec) was determined.

Thickness

The entire thickness of the thermoplastic resin film obtained in the sheet forming example was measured using a constant pressured thickness measurement instrument (device name: PG-01J; manufactured by Teclock Corporation) in accordance with JIS K 7130:1999, "Plastic - Film and sheeting - Determination of thickness". The thickness of each layer of the thermoplastic resin film obtained in the sheet forming example was determined as follows: a sample for cross-section measurement was created by cooling a measurement sample to a temperature not higher than -60°C using liquid nitrogen and then placing the sample on a glass sheet, and cutting at a perpendicular angle using a razor blade (trade name Proline Blade, manufactured by Schick Japan K. K.). The obtained sample was observed at the cross-section using a scanning electron microscope (device name JSM-6490, manufactured by JEOL, Ltd.) and the boundary lines were distinguished by structural appearance. The thickness of each layer was calculated by multiplying the entire thickness by the observed layer thickness ratio of each layer.

Basis weight

The basis weight of the thermoplastic resin film obtained in Sheet Forming Examples 1 and 2 were determined by weighing a sample, which had been punched out in a 100 mm × 100 mm size, by an electronic balance in accordance with JIS P 8124:2011, "Paper and board - Determination of grammage" and then dividing the obtained mass by the area.

Density

The density $\rho$ of the thermoplastic resin film obtained in Sheet Forming Examples 1 and 2 was determined as a value obtained by dividing the basis weight obtained as described above by the thickness obtained as described above. Furthermore, the true density $\rho_0$ of the used thermoplastic resin was determined by subjecting a pressed sheet of the used thermoplastic resin to a substitution method in water, in accordance with the Method A of JIS K 7112:1999, "Plastics - Methods of determining the density and relative density of non-cellular plastics".

Porosity P

The porosity P was calculated by the following formula (1) using the true density $\rho_0$ of the used thermoplastic resin and the density $\rho$ of the obtained thermoplastic resin film obtained in the sheet forming examples.

$$\text{Porosity P } [\%] = (\rho_0 - \rho) \, / \, \rho_0 ... \quad \text{Formula (1)}$$

Proportion of redissolution C of surface coating agent to water

Each of Preparation Example Nos. 1 to 9, which are the coating agents whose compositions are described in Table 2, was placed in an oven, and the moisture was completely vaporized at 170°C to collect the solid component of the coating agent. At this time, the mass was measured and recorded as W1. Thereafter, the obtained solid component of the coating agent was placed in ion exchange water and stirred for 12 hours, and then vacuum filtrated using a filter paper (trade name: GS-25; manufactured by ADVANTEC) to collect a water-insoluble component. The collected water-insoluble component was dried in an oven at 70°C for 2 hours, and then the mass was measured and recorded as W2. The proportion of redissolution C was calculated by the following formula (2).

$$\text{Proportion of redissolution to water C } [\%] = (W1 - W2) \, / \, W1 \times 100 ...$$
$$\text{Formula (2)}$$

Water contact angle H

The water contact angle H was measured by dropping 1 $\mu$L of water onto the coated surface of the thermoplastic resin film having a coating layer using a fully automated contact angle meter (device name: DM-700; manufactured by Kyowa Interface Science Co., Ltd.) at 23°C and relative humidity of 50%.

Evaluation of UV offset printability

For the UV offset printability, the thermoplastic resin film obtained in Working Examples 1 to 9 and Comparative Examples 1 to 5 was cut to A4 size, and 2,000 sheets of the cut films were printed with UV offset printing ink (trade name: BC161; manufactured by T&K Toka Corporation) using an offset printer (device name: RYOBI 3300CR; manufactured by Ryobi Limited). To the obtained printed materials, UV (radiation dose: 100 mJ/cm$^2$) was irradiated to solidify the ink, and then provided for printability evaluation and water resistance evaluation.

Evaluation of printability

Parts, where dot area ratio was 50%, of 2,000 sheets of the printed material were observed to perform printability evaluation of emulsification. In Table 5, results of the printability evaluation are shown using the following symbols.

○: Paper feeding and ejection were excellent, and no emulsification was observed
Δ: Paper feeding and ejection were poor
✕: Emulsification was observed

Evaluation of water resistance

The obtained offset printing sample was immersed in water at 40°C for 24 hours, and then water on the surface was wiped off. Thereafter, a 5 cm long piece of 18 mm width cellophane tape (trade name: CT-18; manufactured by Nichiban Co., Ltd.) was adhered thereto and then peeled off rapidly with hands, and the peeling of ink was visually checked to evaluate. In Table 5, results of the water resistance evaluation are shown using the following symbols.

◎ : Ink remained in 100% of the area where peeling by hands was performed, or the thermoplastic resin film was broken since the adhesion of ink was too firm.
○: Ink remained in 80% or greater but less than 100% of the area where peeling by hands was performed.
Δ: Ink remained in 50% or greater but less than 80% of the area where peeling by hands was performed.
✕: Ink remained in less than 50% of the area where peeling by hands was performed.

Ink adhesion test by humidification promoting test

The thermoplastic resin film obtained in Working Examples 1 to 9 and Comparative Examples 1 to 5 was left at 40°C/80% for 2 weeks to obtain a humidification promoting test sample. On the face having the surface coating layer of the humidification promoting test sample, solid-printing was performed at the amount of applied ink of 1.5 g/m$^2$ using a UV offset ink (trade name: BC161; manufactured by T&K Toka Corporation) and an RI tester (trade name: model RI2; manufactured by IHI Machinery and Furnace Co., Ltd.) in accordance with JIS K 5701-1: 2000, "Lithographic inks - Part 1: Testing methods". Thereafter, using a UV irradiating machine, UV was irradiated in a manner that the radiation strength was 100 mJ/cm$^2$ to obtain an ink transfer and ink adhesion evaluation sample.

Ink transfer

The ink transfer condition of the obtained sample for evaluation was visually evaluated. In Table 5, results of the ink transfer evaluation are shown using the following symbols.

◎: No transfer failure occurred and the condition was good
○: Unprinted white part was observed but was not conspicuous
Δ: Blur was observed (lowest limit in practical use)
✕: Transfer failure occurred and the condition was poor (not appropriate for practical use)

Ink adhesion

The printed surface of the obtained sample for evaluation, a 5 cm long piece of 18 mm width cellophane tape (trade name: CT 405AP-18; manufactured by Nichiban Co., Ltd.) was adhered thereto and then peeled off rapidly with hands, and the peeling of ink was visually checked to evaluate. In Table 5, results of the ink adhesion evaluation are shown using the following symbols.

◎: Ink remained in 100% of the area where peeling by hands was performed, or the thermoplastic resin film was broken since the adhesion of ink was too firm.

○: Ink remained in 80% or greater but less than 100% of the area where peeling by hands was performed.

△: Ink remained in 50% or greater but less than 80% of the area where peeling by hands was performed.

✕: Ink remained in less than 50% of the area where peeling by hands was performed.

In-mold molding

The thermoplastic resin film obtained in Working Examples 1 to 9 and Comparative Examples 1 to 5 was formed into a label for producing a label-attached plastic container by punching out the thermoplastic resin film into a rectangular shape having a 60 mm width and a 110 mm length. This label was positioned in one of the molds for blow molding capable of molding a bottle having an inner volume of 400 mL in a manner that the heat seal layer faces the cavity side, and fixed in the mold using vacuum. Thereafter, high density polyethylene (trade name: NOVATEC HD HB420R; manufactured by Japan Polyethylene Corporation; MFR (JIS K 7210:1999) = 0.2 g/10 min; peak melting temperature (JIS K 7121:2012) = 133°C, peak crystallization temperature (JIS K 7121:2012) = 115°C, density = 0.956 g/cm$^3$) was melted at 170° to extrude into a parison to the space in between the molds. After the molds were then closed, compressed air of 4.2 kg/cm$^2$ was supplied to the parison. The parison was expanded for 16 seconds, thereby bringing the parison in close contact with the molds to form a container shape while the parison and the label were fusion-bonded. Then, the molded product was cooled in the molds, and a label-attached hollow molded container was obtained by opening the molds. At this time, the cooling temperature of the molds was 20°C and the shot cycle time was 34 seconds/shot. The setting capability of the label and appearance of the hollow molded container were checked, and the condition of the container was visually checked.

◎: Firmly adhered and separation of the label was not visually observed

○: Firmly adhered but separation of the label was visually observed

△: Setting of the label to the mold was difficult (lowest limit for practical use)

✕: Firm adhesion or setting of the label to the mold was not possible (impossible for practical use)

Evaluation of UV inkjet printability

Evaluation of bleeding

Letters were printed on the surface coating layer of the thermoplastic resin film using an inkjet printer (SJ-500, manufactured by CTC Japan, Ltd.) that uses a UV curable ink (AGORA G1; manufactured by Agfa-Gevaert Japan, Ltd.). The printed letters were evaluated visually.

◎: Letters were very clear and showed high contrast

○: Letters were clear and showed high contrast

△: Bleeding was observed in letters (lowest limit for practical use)

✕: Bleeding was observed in letters (impossible for practical use)

Evaluation of dry ink adhesion

On the surface coating layer of the thermoplastic resin film, a UV curable ink (AGORA G1; manufactured by Agfa-Gevaert Japan, Ltd.) was coated using a #1 wire bar, and then the ink was cured by irradiating with ultraviolet light using a UV lamp (metal halide lamp; output 80 W/cm; manufactured by Eye Graphics Co., Ltd.). Note that the printed surface of the sample was irradiated with ultraviolet light under a lamp by passing through the sample one time at the position that is 10 cm distant from the lamp at a rate of 10 m/min. On the cured ink, a piece of 18 mm width cellophane tape (trade name: CT-18; manufactured by Nichiban Co., Ltd.) was attached and adhered firmly by a finger. Thereafter, 180° peeling was performed at a rate that does not cause internal failure of the substrate. The dry ink adhesion was evaluated from the proportion of the area where ink was remained on the thermoplastic resin film.

◎: Area where the ink was left was 100%

○: Area where the ink was left was 80% or greater but less than 100%

△: Area where the ink was left was 50% or greater but less than 100% (lowest limit in practical use)

✕: Area where the ink was left was less than 50% (not appropriate for practical use)

Evaluation of ink water-resistant adhesion

Then, the thermoplastic resin film, which was coated with the ink described above and cured, was immersed in water (ion exchange water) filled in a tray in a manner that the thermoplastic resin film did not float. After being immersed for 24 hours, the thermoplastic resin film was removed from the water, and water was wiped off with tissue paper. Thereafter, the ink water-resistant adhesion was evaluated by the same criteria as those for the "Dry ink adhesion" of the "Evaluation of UV inkjet printability".

Evaluation of direct thermosensitive printability

Evaluation of image quality

Black solid printing was performed by feeding paper in a manner that the recording layer (F) was the face to be printed, using a commercially available direct thermosensitive printer Multiscan Video Printer UP-930 (trade name; manufactured by Sony Corporation) in a constant temperature/constant humidity chamber at a temperature of 23°C and a relative humidity of 50%. The printed black solid part was visually observed and evaluated according to the following criteria.

◎: No unevenness in concentration was observed and the quality was very good
○: Slight unevenness in concentration was observed but the quality was good
Δ: Unprinted white part was observed but the quality was practically usable
×: Unevenness in concentration was observed and the quality was not practically usable

Evaluation of water-based inkjet printability

Evaluation of image quality

An ISO standard image (ISO/JIS-SCID high definition, digital Standard Colour Image Data; name of the image: portrait; identification number of the image: N1) was printed on the recording layer (F) using an inkjet printer (PM-A900; manufactured by Seiko Epson Corporation) that uses a dye ink and an inkjet plotter (PX-7500; manufactured by Seiko Epson Corporation) that uses a pigment-based ink. The printed image was evaluated visually.

◎: Printed image was very clear and showed high contrast
○: Printed image was clear and showed high contrast
Δ: Printed image was clear but showed low contrast, and color was somewhat dark (lowest limit for practical use)
×: Printed image was not clear, and color was dark (impossible for practical use)

Evaluation of melt thermal transfer printability

Ink transferability

Five sheets of test image printing were performed continuously on the front face side (on the surface coating layer or on the recording layer (F)) of the thermoplastic resin film obtained in the working examples and comparative examples using a barcode printer, ZEBRA140 Xi III (trade name; manufactured by Zebra Co., Ltd.) and a melt-type resin ink ribbon, B110C (trade name; manufactured by FujiCopian Co., Ltd.). Fusion properties with hot roll was evaluated by the following criteria. Note that conditions were set so that the temperature of the thermal head was 110°C (actual measurement was performed by attaching a thermocouple to the thermal head).
The temperature applied to the recording paper was set to 110°C and printing rate was set to 3 inch/sec to transfer the melt-type wax ink ribbon to the recording paper. The barcode (code 39) printed by melt thermal transfer was read by a barcode verifier, LASERCHEK II (trade name; manufactured by Fuji Electric Refrigerator Co. Ltd.) at a temperature of 23°C and relative humidity of 50%, and read rate was evaluated based on American National Standards Institute (ANSI) Grade. The ANSI Grade has 6 grades, consisting of A to D, F and No Decode, and A indicates the best print condition. ANSI Grades A to C were considered to be passing grades.

A: Excellent (No blur was observed in the barcode, and one scan of barcode using a commercially available barcode reader can correctly read the barcode)
B: Good (Basically, one scan of barcode can read the barcode; however, there may be cases where another scan of the barcode is needed to read the barcode)

C: Pass (Slight blur was observed in the barcode and a plurality of times of scanning was needed to read the barcode, but the sample was practically usable)

D, F: Failed (Lines of the barcode were broken, and more times of scanning, than that of level C, were required to read the barcode and the sample was not practically usable)

No Decode: Failed (the sample was not recognized as the barcode of code 39)

Ink adhesion

On the printed image, a piece of 18 mm width cellophane tape (trade name: CT-18; manufactured by Nichiban Co., Ltd.) was attached and adhered firmly by a finger. Thereafter, 180° peeling was performed at a rate that does not cause internal failure of the substrate. The dry ink adhesion for the image remained on the thermoplastic resin film was evaluated based on the ANSI Grade described above.

Thereafter, the printed thermoplastic resin film described above was immersed in water (ion exchange water) filled in a tray in a manner that the thermoplastic resin film did not float, and after being immersed in water for 24 hours, the thermoplastic resin film was taken out. Water was wiped off with tissue paper, and ink water-resistant adhesion was evaluated by the same criteria as those for the "Dry ink adhesion" of the "Evaluation of melt thermal transfer printability".

Friction resistance

The printed thermoplastic resin film described above was rubbed for 1,000 times with a load of 200 g by a dry white cotton cloth for rubbing using a friction tester for dye colour fastness test, FR-II (trade name; manufactured by Suga Test Instruments Co., Ltd.) in accordance with JIS L 0849:1996. Furthermore, while water and ethanol were appropriately supplied to maintain wet condition constantly, rubbing was performed for 200 times at a load of 200 g. The printed surface after the friction test was evaluated by a barcode verifier based on ANSI Grade, and friction resistance was evaluated by the same criteria as those for the "Dry ink adhesion" for the "Evaluation of melt thermal transfer printability".

Evaluation of printability using electrophotography method

Toner adhesion

Five sheets of test image printing were performed continuously on the front face of the thermoplastic resin film obtained in the working examples and comparative examples using a color laser printer (CASIO SPEEDIA N 3600; manufactured by Casio Computer Co., Ltd.). On the printed image, a piece of cellophane tape (trade name: LP-18; manufactured by Nichiban Co., Ltd.) was attached and adhered firmly by a finger. Thereafter, 180° peeling was performed at a rate that does not cause internal failure of the substrate. The toner adhesion for the image remained on the thermoplastic resin film was evaluated according to the following criteria.

◎: Peeling of the print was not observed.

◎: Peeling was observed in less than 10% of the print; however, the peel strength was high when being peeled off, and the sample had practically no problems.

Δ: Peeling was observed in 10% or greater but less than 50% of the print; however, the peel strength was high when being peeled off, and the sample was practically usable.

×: Peeling of the print was observed, and the peel strength was low when being peeled off. The sample was not appropriate for practical use.

Thereafter, the printed thermoplastic resin film described above was immersed in water (ion exchange water) filled in a tray in a manner that the thermoplastic resin film did not float, and after being immersed in water for 24 hours, the thermoplastic resin film was taken out. Water was wiped off with tissue paper, and ink water-resistant adhesion was evaluated by the same criteria as those for the "Toner adhesion" of the "Evaluation of printability using electrophotography method".

Fusion properties with hot roll

Two sheets of the thermoplastic resin films were stacked, in a manner that the front faces thereof were in contact with each other, and sandwiched by a heat gradient tester (Type HG-100; manufactured by Toyo Seiki Seisaku-sho, Ltd.) and pressure-bonded for 5 seconds at the temperature settings at 90 to 170°C with the temperature interval of 20°C. The fusion properties with hot roll was evaluated by the following criteria.

◎: The samples were not adhered at 170°C

○: The samples were not adhered at 150°C or higher but lower than 170°C

△: The samples were not adhered at 130°C or higher but lower than 150°C (lowest limit in practical use)

×: The samples were adhered at lower than 130°C (not appropriate for practical use)

Preparation examples for coating agents

Raw materials used in the test examples for coating agents described below are shown in Table 1. Production conditions and physical properties of the coating agents are shown in Table 2. As the production conditions of the coating agents in Table 2, composition of each raw material in the coating agents, presence/absence of pH adjustment by a 10% acetic acid aqueous solution, solid concentration, and pH of the coating agents are shown. Note that "part by mass" in the composition indicates part by mass as an aqueous solution or water dispersion and does not indicate part by mass as a solid content. As the physical properties, proportion of redissolution to water C is shown. Note that, in Table 2, "-" indicates that the coating agent does not contain this component. Furthermore, in Table 2, the total of contents may slightly exceed 100% due to calculation.

[Table 1]

| Raw material | Component |
|---|---|
| Metal oxide-containing microparticles A | Alumina surface-treated colloidal silica; solid concentration: 23%; particle size: 10 to 15 nm (trade name: SNOWTEX ST-AK, manufactured by Nissan Chemical Industries, Ltd.) |
| Metal oxide-containing microparticles B | Alumina sol; solid concentration: 22%; average particle size: 20 nm (trade name: ALUMINASOL 520; manufactured by Nissan Chemical Industries, Ltd.) |
| Metal oxide-containing microparticles C | Alumina surface-treated colloidal silica; solid concentration: 32%; particle size: 50 to 80 nm (trade name: SNOWTEX ST-AK-YL, manufactured by Nissan Chemical Industries, Ltd.) |
| Dispersion of organic polymer in solvent A | Urethane water dispersion; solid concentration: 25%; average particle size: 75 nm (trade name: HYDRAN CP7050; manufactured by DIC Corporation) |
| Dispersion of organic polymer in solvent B | Acrylic water dispersion; solid concentration: 40%; average particle size: 300 nm (trade name: VONCOAT VO8; manufactured by DIC Corporation) |
| Water-soluble polymer A | Polyvinyl alcohol (trade name: K-434; manufactured by The Nippon Synthetic Chemical Industry Co., Ltd.) |
| Water-soluble polymer B | Polyethyleneimine (trade name: EPOMIN SP-003; manufactured by Nippon Shokubai Co., Ltd.) |
| Water-soluble polymer C | Polyethyleneimine (trade name: SAFTOMER AC-72; manufactured by Mitsubishi Chemical Corporation) |
| Water-soluble polymer D | Polyamide-epichlorohydrin (trade name: Wet Strength Agent WS4082; manufactured by Seiko PMC Corporation) |

[Table 2-1]

| Coating agent | Production Conditions | | | | | | | |
|---|---|---|---|---|---|---|---|---|
| | Metal oxide-containing microparticles | | | | Dispersion of organic polymer in solvent | | | |
| Preparation Example No. | Type | Composition of coating material | | In coating layer | Type | Composition of coating material | | In coating layer |
| | | Concentration % | Part by mass | Content % | | Concentration % | Part by mass | Content % |
| 1 | A | 23 | 30 | 53.9 | A | 25 | 21 | 41.0 |
| 2 | A | 23 | 30 | 56.8 | A | 25 | 21 | 43.2 |
| 3 | B | 22 | 31.4 | 53.9 | A | 25 | 21 | 41.0 |
| 4 | A | 23 | 20 | 39.5 | B | 40 | 16.8 | 57.7 |
| 5 | A | 23 | 15 | 29.3 | B | 40 | 20 | 67.9 |
| 6 | A | 23 | 30 | 100.0 | - | - | - | - |
| 7 | - | - | - | - | A | 25 | 21 | 88.8 |
| 8 | - | - | - | - | - | - | - | - |
| 9 | B | 22 | 60 | 70.3 | A | 25 | 21 | 28.0 |
| 10 | A | 23 | 65 | 86.5 | A | 25 | 8 | 11.6 |
| 11 | A | 23 | 15 | 13.8 | A | 25 | 20 | 20.0 |
| 12 | A | 23 | 15 | 11.4 | A | 25 | 15 | 12.4 |
| 13 | A | 23 | 5 | 68.3 | A | 25 | 2 | 29.7 |
| 14 | A | 23 | 40 | 93.3 | - | - | - | - |
| 15 | A | 23 | 30 | 51.2 | A | 25 | 21 | 39.0 |
| 16 | A | 23 | 15 | 25.6 | A | 25 | 21 | 39.0 |
| | C | 32 | 10.8 | 25.6 | | | | |
| 17 | C | 32 | 21.6 | 51.3 | A | 25 | 21 | 38.9 |

[Table 2-2]

| Coating agent | Production Conditions | | | | | | | Physical Properties |
|---|---|---|---|---|---|---|---|---|
| | Water-soluble polymer | | | | pH adjustment by 10% acetic acid aqueous solution | Solid concentration % | pH of coating agent | Proportion of redissolution to water C % |
| Preparation Example No. | Type | Composition of coating material | | In coating layer | | | | |
| | | Concentration % | Part by mass | Content % | | | | |
| 1 | B | 33 | 2 | 5.2 | Present | 10.7 | 5.3 | 0.5 |
| 2 | - | - | - | - | Absent | 10.1 | 5.0 | 1.6 |
| 3 | B | 33 | 2 | 5.1 | Present | 10.7 | 5.4 | 0.3 |
| 4 | A | 33 | 1 | 2.8 | Present | 9.7 | 5.8 | 1.0 |
| 5 | A | 33 | 1 | 2.8 | Present | 9.8 | 5.8 | 1.0 |
| 6 | - | - | - | - | Absent | 5.7 | 4.9 | 0.1 |
| 7 | A | 33 | 2 | 11.2 | Absent | 4.9 | 6.5 | 0.3 |
| 8 | B | 33 | 2 | 100.0 | Absent | 0.5 | 7.8 | 100 |
| 9 | B | 33 | 1 | 1.8 | Present | 15.6 | 5.2 | 0.3 |
| 10 | B | 33 | 1 | 1.9 | Present | 14.4 | 5.3 | 0.5 |
| 11 | B | 33 | 50 | 66.1 | Present | 20.7 | 5.3 | 0.2 |
| 12 | B | 33 | 70 | 76.2 | Present | 25.2 | 5.3 | 0.2 |
| 13 | B | 33 | 0.1 | 2.0 | Present | 1.4 | 5.3 | 0.2 |
| 14 | A | 33 | 2 | 6.7 | Absent | 8.2 | 5.5 | 0.2 |
| 15 | C | 25 | 2.64 | 4.9 | Present | 11.2 | 5.2 | 0.1 |
| | D | 32 | 2.06 | 4.9 | | | | |
| 16 | C | 25 | 2.64 | 4.9 | Present | 11.2 | 5.4 | 0.5 |
| | D | 32 | 2.06 | 4.9 | | | | |
| 17 | C | 25 | 2.64 | 4.9 | Present | 11.2 | 5.5 | 0.7 |
| | D | 32 | 2.06 | 4.9 | | | | |

28

Preparation Example 1:

A water-soluble polymer described in Table 1 and water were mixed at a compounding ratio described in Table 2, and stirred for 5 minutes. Thereafter, using acetic acid having a concentration of 10%, pH was adjusted in a manner that the pH of the mixture of the polymer and water was from 4.5 to 5.5. Thereafter, an emulsion and metal oxide-containing microparticles described in Table 1 were added to the mixture, which was obtained after the pH adjustment, at a compounding ratio described in Table 2, and stirred for 5 minutes. By this, the coating agent 1 was prepared. Each of Preparation Examples 3 to 5, 9 to 13, and 15 to 17 was prepared in the same manner as in Preparation Example 1.

Preparation Example 2:

The coating agent 2 was prepared in the same manner as in Preparation Example 1 except for using no polyethyleneimine and no acetic acid for the pH adjustment of Preparation Example 1. Each of Preparation Examples 6 to 8 and 14 was prepared in the same manner using the composition described in Table 2.

Sheet forming examples of thermoplastic resin films

In Table 3, specifications of raw materials for labels used in the sheet forming examples of the thermoplastic resin films of the coating agents are shown. In Table 3, "-" indicates "no data". Furthermore, specifications of raw materials for containers are also shown in Table 3. Sheet forming conditions of the thermoplastic resin films are shown in Table 4A. Evaluation result values of physical properties of the sheets are shown in Table 4B. In Table 4A, "-" indicates "none of this component or layer was contained". In Table 4B, "-" indicates "none of this layer was contained" or "no data".

[Table 3-1]

|  |  | Type | Abbreviated name | Raw material | Trade name | Manufacturer |
|---|---|---|---|---|---|---|
| Raw material for label | Thermoplastic resin | | PP-1 | Propylene homopolymer | NOVATEC PP MA4 | Japan Polypropylene Corporation |
| | | | PP-2 | Propylene homopolymer | NOVATEC PP MA3 | Japan Polypropylene Corporation |
| | | | PP-3 | Propylene homopolymer | NOVATEC PP EA8 | Japan Polypropylene Corporation |
| | | | PE-1 | Metallocene-based polyethylene | KERNEL KS 571 | Japan Polyethylene Corporation |
| | | | PE-2 | High density polyethylene | NOVATEC HD HJ360 | Japan Polyethylene Corporation |
| | | | PE-3 | High density polyethylene | NOVATEC HD HY430 | Japan Polyethylene Corporation |
| | Inorganic fine powder | | CA-1 | Heavy calcium carbonate | Softon #1800 | Bihoku Funka Kogyo Co., Ltd., |
| | | | CA-2 | Heavy calcium carbonate | Softon #2200 | Bihoku Funka Kogyo Co., Ltd., |
| | | | TI-1 | Rutile titanium dioxide | TIPAQUE CR-60 | Ishihara Sangyo Kaisha, Ltd. |
| Raw material for container | Thermo-plastic resin | | PE-4 | High density polyethylene | NOVATEC HD HB420R | Japan Polyethylene Corporation |

[Table 3-2]

| | Type | Abbreviated name | MFR [g/10 min] (JIS K 7210: 1999) | Peak melting temperature [°C] (JIS K 7121:1987) | Peak crystallization temperature [°C] (JIS K 7210:1999) | Density [g/cm$^3$] | Volume average particle size |
|---|---|---|---|---|---|---|---|
| Raw material for label | Thermo - plastic resin | PP-1 | 5 | 167 | - | - | - |
| | | PP-2 | 11 | - | - | 0.90 | - |
| | | PP-3 | 0.8 | - | - | 0.90 | - |
| | | PE-1 | 12 | 100 | 89 | 0.907 | - |
| | | PE-2 | 5.5 | - | - | 0.951 | - |
| | | PE-3 | 0.8 | - | - | 0.956 | - |
| | Inorganic fine powder | CA-1 | - | - | - | - | 1.8 |
| | | CA-2 | - | - | - | - | 1.0 |
| | | TI-1 | - | - | - | - | 0.2 |
| Raw material for container | Thermoplastic resin | PE-4 | 0.2 | 133 | 115 | 0.956 | - |

[Table 4A-1]

| | Sheet forming condition of thermoplastic resin film | | | | | | | | |
|---|---|---|---|---|---|---|---|---|---|
| | Substrate (A) - base layer | | | | Substrate (A) - laminate layer | | | | Heat seal layer (B) |
| | PP | PE | CA | TI-1 | PP-1 | PE | CA-1 | TI-1 | PE-1 |
| | wt% | wt% | wt% | wt% | wt% | wt% | wt% | wt% | wt% |
| Sheet Forming Example 1 | (PP-1) 80 | - | (CA-1) 19 | 1 | - | - | - | - | 100 |
| Sheet Forming Example 2 | (PP-1) 98 | - | (CA-1) 2 | 0 | - | - | - | - | 100 |
| Sheet Forming Example 3 | - | (PE-3) 30 | (CA-2) 70 | - | - | - | - | - | - |
| Sheet Forming Example 4 | (PP-2) 14 (PP-3) 60 | (PE-2) 10 | (CA-1) 15 | 1 | (PP-2) 20 (PP-3) 30 | (PE-2) 4.5 | 45 | 0.5 | - |
| Sheet Forming Example 5 | (PP-2) 50 (PP-3) 40 | (PE-2) 9 | (CA-1) 1 | - | (PP-2) 20 (PP-3) 30 | (PE-2) 4.5 | 45 | 0.5 | - |
| Sheet Forming Example 6 | (PP-2) 14 (PP-3) 60 | (PE-2) 10 | (CA-1) 15 | 1 | (PP-2) 38 (PP-3) 13 | (PE-2) 3.5 | 45 | 0.5 | - |

(continued)

| | Sheet forming condition of thermoplastic resin film | | | | | | | | |
|---|---|---|---|---|---|---|---|---|---|
| | Substrate (A) - base layer | | | | Substrate (A) - laminate layer | | | | Heat seal layer (B) |
| | PP | PE | CA | TI-1 | PP-1 | PE | CA-1 | TI-1 | PE-1 |
| | wt% | wt% | wt% | wt% | wt% | wt% | wt% | wt% | wt% |
| Sheet Forming Example 7 | (PP-2) 14 (PP-3) 60 | (PE-2) 10 | (CA-1) 15 | 1 | (PP-2) 20 (PP-3) 30 | (PE-2) 4.5 | 45 | 0.5 | - |
| Sheet Forming Example 8 | (PP-1) 40 (PP-3) 30 | (PE-2) 10 | (CA-1) 20 | - | (PP-1) 65 | (PE-3) 15 | 10 | 10 | - |
| Sheet Forming Example 9 | (PP-2) 12 (PP-3) 8 | (PE-2) 5 | (CA-1) 70 | 5 | - | - | - | - | - |

[Table 4A-2]

| | Sheet forming condition of thermoplastic resin film | | | | | | | | |
|---|---|---|---|---|---|---|---|---|---|
| | Strengthening layer (C) | | | | Highly smooth layer (D) | Machine-direction stretching | | Transverse-direction stretching | |
| | PP | PE | CA-1 | TI-1 | PP-1 | Temperature | Ratio | Temperature | Ratio |
| | wt% | wt% | wt% | wt% | wt% | °C | Scale factor | °C | Scale factor |
| Sheet Forming Example 1 | - | - | - | - | - | 150 | 4 | 160 | 9 |
| Sheet Forming Example 2 | - | - | - | - | - | 150 | 4 | 160 | 9 |
| Sheet Forming Example 3 | - | - | - | - | - | 110 | 2 | 128 | 2 |
| Sheet Forming Example 4 | - | - | - | - | - | 140 | 5 | 155 | 8 |
| Sheet Forming Example 5 | - | - | - | - | - | 140 | 5 | 155 | 8 |
| Sheet Forming Example 6 | (PP-2) 14 (PP-3) 60 | (PE-2) 10 | 15 | 1 | - | 140 | 5 | 155 | 8 |

(continued)

| | Sheet forming condition of thermoplastic resin film | | | | | | | | |
| --- | --- | --- | --- | --- | --- | --- | --- | --- | --- |
| | Strengthening layer (C) | | | | Highly smooth layer (D) | Machine-direction stretching | | Transverse-direction stretching | |
| | PP | PE | CA-1 | TI-1 | PP-1 | Temperature | Ratio | Temperature | Ratio |
| | wt% | wt% | wt% | wt% | wt% | °C | Scale factor | °C | Scale factor |
| Sheet Forming Example 7 | - | - | - | - | 100 | 140 | 5 | 155 | 8 |
| Sheet Forming Example 8 | - | - | - | - | 100 | 135 | 5 | 165 | 9 |
| Sheet Forming Example 9 | - | - | - | - | - | - | - | - | - |

[Table 4B]

| | Physical properties of thermoplastic resin film sheet | | | | | | | |
|---|---|---|---|---|---|---|---|---|
| | Substrate layer (A) Thickness | Heat seal layer (B) Thickness | Strengthening layer (C) Thickness | Highly smooth layer (D) Thickness | Total Thickness t | Density | Opacity | Porosity p |
| | μm | μm | μm | μm | μm | g/cm³ | % | % |
| Sheet Forming Example 1 | 100 | 5 | - | - | 105 | 0.75 | - | 24 |
| Sheet Forming Example 2 | 75 | 5 | - | - | 80 | 0.94 | - | 1 |
| Sheet Forming Example 3 | 175 | - | - | - | 175 | 0.73 | 84 | 58 |
| Sheet Forming Example 4 | 110 | - | - | - | 110 | 0.77 | 94 | - |
| Sheet Forming Example 5 | 150 | - | - | - | 150 | 1.02 | 63 | - |
| Sheet Forming Example 6 | 60 | - | 20 | - | 80 | 0.83 | 89 | - |
| Sheet Forming Example 7 | 95 | - | - | 15 | 110 | 0.79 | 94 | - |
| Sheet Forming Example 8 | 85 | - | - | 15 | 100 | 0.70 | 92 | - |
| Sheet Forming Example 9 | 100 | - | - | - | 100 | 1.55 | 92 | - |

Sheet Forming Example 1:

As the raw materials for the substrate layer (A), propylene homopolymer (PP-1), heavy calcium carbonate (CA-1), and rutile titanium dioxide (TI-1) described in Table 3 were mixed at a mass ratio of 80:19:1. After the mixture was melt-kneaded using an extruder set at 250°C, the mixture was supplied to a T-die set at 250°C and then extruded in a sheet shape. The obtained sheet was cooled to approximately 60°C by a cooling roll to obtain an unstretched sheet. Thereafter, this unstretched sheet was heated again to 150°C, then stretched 4-fold in the machine direction utilizing the difference in circumferential speeds of rolls, and cooled to approximately 60°C by a cooling roll to obtain a 4-fold stretched sheet.

Meanwhile, as the raw material for the heat seal layer (B), metallocene-based polyethylene (PE-1) described in Table 3 was melted by an extruder set at 230°C, extruded in a sheet shape from a T-die set at 230°C, and overlaid on the 4-fold stretched sheet described above. Then the sheets were introduced to the space in between a metal cooling roll having a gravure embossing pattern with #150 lines and a matte rubber roll. While the sheets were being adhered by compressing in between the metal cooling roll and the matte rubber roll, the embossing pattern was transferred to the thermoplastic resin side, and the obtained sheet was cooled to room temperature by a cooling roll to obtain a laminated resin sheet having a two-layer structure of olefin-based resin film/heat seal layer.

Thereafter, this laminated resin sheet having a two-layer structure of olefin-based resin film/heat seal layer was heated again to 160°C using a tenter oven, and the sheet was stretched 9-fold in the transverse direction by a tenter. Furthermore, annealing treatment was performed by a heat set zone adjusted to 160°C, and then the sheet was cooled to approximately 60°C by a cooling roll. Thereafter, edge parts were slitted to obtain a biaxially stretched resin film having a two-layer structure with the entire thickness, density, and opacity described in Table 4B. This was used as the thermoplastic resin film of Sheet Forming Example 1.

Sheet Forming Example 2:

The thermoplastic resin film of Sheet Forming Example 2 was obtained in the same manner as in Sheet Forming Example 1 except for changing the compounding ratio of PP-1, CA-1, TI-1 constituting the substrate layer (A) of Sheet Forming Example 1 to the compounding ratio described in Table 4A, and changing the amount discharged from the extruder to an amount that was 75% of that in Sheet Forming Example 1.

Sheet Forming Example 3:

As the raw materials for the substrate layer (A), high density polyethylene (PE-3) and heavy calcium carbonate (CA-2) described in Table 3 were mixed at a mass ratio of 30:70. After the mixture was melt-kneaded using an extruder set at 180°C, the mixture was supplied to a T-die set at 190°C and then extruded in a sheet shape. The extruded sheet was cooled to approximately 40°C by a cooling roll to obtain an unstretched sheet having a thickness of 296 μm. The unstretched sheet was heated again to 110°C and stretched 2-fold in the machine direction (MD stretching) utilizing the difference in circumferential speeds of rolls, and then, after being heated again to 128°C using a tenter oven, the sheet was stretched 2-fold in the transverse direction (TD stretching) using a tenter. Furthermore, annealing treatment was performed by a heat set zone adjusted to 130°C, and then the sheet was cooled to approximately 60°C by a cooling roll. Thereafter, edge parts were slitted to obtain a biaxially stretched HDPE film having a porous monolayer structure.

Sheet Forming Example 4:

As the raw materials for the base layer constituting the substrate layer (A), propylene homopolymer (PP-2), propylene homopolymer (PP-3), high density polyethylene (PE-2), heavy calcium carbonate (CA-1), and rutile titanium dioxide (TI-1) described in Table 3 were mixed at a mass ratio of 14:60:10:15:1. After the mixture was melt-kneaded using an extruder set at 260°C, the mixture was supplied to a T-die set at 260°C and then extruded in a sheet shape. The obtained sheet was cooled to approximately 70°C by a cooling roll to obtain an unstretched sheet. Thereafter, this unstretched sheet was heated again to 140°C, then stretched 5-fold in the machine direction utilizing the difference in circumferential speeds of rolls, and cooled to approximately 60°C by a cooling roll to obtain a 5-fold stretched sheet.

Meanwhile, as the raw materials for the laminate layer constituting the substrate layer (A), propylene homopolymer (PP-2), propylene homopolymer (PP-3), high density polyethylene (PE-2), heavy calcium carbonate (CA-1), and rutile titanium dioxide (TI-1) described in Table 3 were mixed at a mass ratio of 20:30:4.5:45:0.5. The mixture was extruded from a T-die set at 260°C into a sheet shape, overlaid on the 5-fold stretched sheet, and introduced to the space in between two metal cooling rolls. The sheets were adhered by being compressed in between the two metal cooling rolls, cooled to room temperature by the cooling rolls to obtain a laminated resin sheet having a two-layer structure of base layer/laminate layer.

Thereafter, as the raw materials for the laminate layer constituting the substrate layer (A), propylene homopolymer (PP-2), propylene homopolymer (PP-3), high density polyethylene (PE-2), heavy calcium carbonate (CA-1), and rutile titanium dioxide (TI-1) described in Table 3 were mixed at a mass ratio of 20:30:4.5:45:0.5. The mixture was extruded from a T-die set at 260°C into a sheet shape, overlaid on the base layer of the laminated resin sheet having the two-layer structure of base layer/laminate layer, and introduced to the space in between two metal cooling rolls. The sheets were adhered by being compressed in between the two metal cooling rolls, cooled to room temperature by the cooling rolls to obtain a laminated resin sheet having a three-layer structure of laminate layer/base layer/laminate layer.

Thereafter, this laminated resin sheet having a three-layer structure of laminate layer/base layer/laminate layer was heated again to 155 °C using a tenter oven, and the sheet was stretched 8-fold in the transverse direction by a tenter. Furthermore, annealing treatment was performed by a heat set zone adjusted to 160°C, and then the sheet was cooled to approximately 60°C by a cooling roll. Thereafter, edge parts were slitted to obtain a biaxially stretched resin film having a three-layer structure with the entire thickness, density, and opacity described in Table 4B. This was used as the thermoplastic resin film of Sheet Forming Example 4.

Sheet Forming Example 5:

The thermoplastic resin film of Sheet Forming Example 5 was obtained in the same manner as in Sheet Forming Example 4 except for changing the compounding ratio of PP-2, PP-3, PE-2, CA-1, and TI-1 of the base layer and the laminate layer constituting the substrate layer (A) of Sheet Forming Example 4 to the compounding ratio described in Table 4A.

Sheet Forming Example 6:

The laminated resin sheet having a two-layer structure of base layer/laminate layer was obtained in the same manner as in Sheet Forming Example 4 except for changing the compounding ratio of PP-2, PP-3, PE-2, CA-1, and TI-1 of the base layer and the laminate layer constituting the substrate layer (A) of Sheet Forming Example 4 to the compounding ratio described in Table 4A.

Thereafter, as the raw materials constituting the strengthening layer (C), propylene homopolymer (PP-2), propylene homopolymer (PP-3), high density polyethylene (PE-2), heavy calcium carbonate (CA-1), and rutile titanium dioxide (TI-1) described in Table 3 were mixed at a mass ratio of 14:60:10:15:1. The mixture was extruded from a T-die set at 260°C into a sheet shape, overlaid on the base layer of the laminated resin sheet having the two-layer structure of base layer/laminate layer, and introduced to the space in between two metal cooling rolls. The sheets were adhered by being compressed in between the two metal cooling rolls, cooled to room temperature by the cooling rolls to obtain a laminated resin sheet having a three-layer structure of strengthening layer (C)/base layer/laminate layer.

Thereafter, this unstretched sheet (the laminated resin sheet having the three-layer structure of strengthening layer (C)/base layer/laminate layer) was heated again to 140°C, then stretched 5-fold in the machine direction utilizing the difference in circumferential speeds of rolls, and cooled to approximately 60°C by a cooling roll to obtain a 5-fold stretched sheet. Thereafter, this laminated resin sheet, which was stretched 5-fold in the machine direction, was heated again to 155°C using a tenter oven, and the sheet was stretched 9-fold in the transverse direction by a tenter. Furthermore, annealing treatment was performed by a heat set zone adjusted to 160°C, and then the sheet was cooled to approximately 60°C by a cooling roll. Thereafter, edge parts were slitted to obtain a biaxially stretched resin film having a three-layer structure with the entire thickness, density, and opacity described in Table 4B. This was used as the thermoplastic resin film of Sheet Forming Example 6.

Sheet Forming Example 7:

The thermoplastic resin film of Sheet Forming Example 7 was obtained in the same manner as in Sheet Forming Example 6 except for forming a highly smooth layer (D) in place of the strengthening layer (C) of Sheet Forming Example 6. More specifically, as the raw material constituting the highly smooth layer (D), propylene homopolymer (PP-1) described in Table 3 was extruded from a T-die set at 260°C into a sheet shape, overlaid on the base layer of the laminated resin sheet having the two-layer structure of base layer/laminate layer, and introduced to the space in between two metal cooling rolls. The sheets were adhered by being compressed in between the two metal cooling rolls, cooled to room temperature by the cooling rolls to obtain a laminated resin sheet having a three-layer structure of highly smooth layer (D)/base layer/laminate layer.

Sheet Forming Example 8:

As the raw materials for the base layer constituting the substrate layer (A), propylene homopolymer (PP-1), propylene homopolymer (PP-3), high density polyethylene (PE-2), and heavy calcium carbonate (CA-1) described in Table 3 were mixed at a mass ratio of 40:30:10:20. The mixture was melt-kneaded by a main extruder set at 260°C. Meanwhile, as the raw materials for the laminate layer constituting the substrate layer (A), propylene homopolymer (PP-1), high density polyethylene (PE-3), heavy calcium carbonate (CA-1), and rutile titanium dioxide (TI-1) described in Table 3 were mixed at a mass ratio of 65:15:10:10, and then mixed with 67% by weight of polypropylene (MFI: 2.4) and 3% by weight of antistatic agent. Thereafter, the mixture was melt-kneaded by a first sub-extruder set at 260°C. Furthermore, as the raw material for the highly smooth layer (D), propylene homopolymer (PP-1) described in Table 3 was melt-kneaded by the first sub-extruder set at 260°C.

The three types of raw materials described above were introduced to a T-die for three-layer. In the T-die, the raw materials were laminated as three layers of highly smooth layer (D)/base layer/laminate layer, and extruded from the T-die head. The extruded sheet was cooled by a cooling roll set at 45 °C to obtain a laminated resin sheet having a three-layer structure of highly smooth layer (D)/base layer/laminate layer. Thereafter, this unstretched sheet (the laminated resin sheet having the three-layer structure of highly smooth layer (D)/base layer/laminate layer) was heated again to 135 °C, then stretched 5-fold in the machine direction utilizing the difference in circumferential speeds of rolls, and cooled to approximately 60°C by a cooling roll to obtain a 5-fold stretched sheet. Thereafter, this laminated resin sheet, which was stretched 5-fold in the machine direction, was heated again to 155°C using a tenter oven, and the sheet was stretched 9-fold in the transverse direction by a tenter. Furthermore, annealing treatment was performed by a heat set zone adjusted to 165°C, and then the sheet was cooled to approximately 60°C by a cooling roll. Thereafter, edge parts were slitted to obtain a biaxially stretched resin film having a three-layer structure with the entire thickness, density, and opacity described in Table 4B. This was used as the thermoplastic resin film of Sheet Forming Example 8.

Sheet Forming Example 9:

As the raw materials for the substrate layer (A), propylene homopolymer (PP-2), propylene homopolymer (PP-3), high density polyethylene (PE-2), heavy calcium carbonate (CA-1), and rutile titanium dioxide (TI-1) described in Table 3 were mixed at a mass ratio of 12:8:5:70:5. This mixture was melt-kneaded by a main extruder set at 200°C. Thereafter, the resin composition for the substrate layer (A) that had been extruded in a strand shap e from the main extruder was send to a calender forming machine set at 220°C, and taken up by drawing unit set at 60°C at the ratio of drawing speed of 1:2.5 to obtain a monolayer film. This was used as the thermoplastic resin film of Sheet Forming Example 9.

Formation of adhesive layer (E)

Using a silicone-treated glassine paper (G7B; manufactured by Oji Tac Co., Ltd.) as a release sheet layer (E), a mixed liquid, in which a solvent-based acrylic adhesive agent (ORIBAIN BPS1109; manufactured by Toyochem Co., Ltd.), isocyanate-based crosslinking agent (ORIBAIN BHS8515; manufactured by Toyochem Co., Ltd.), and toluene were mixed at a ratio of 100:3:45, were coated on the silicone-treated surface of the glassine paper in a manner that the coated amount after drying was 25 g/m$^2$ using a comma coater, and then dried to form an adhesive layer (E). Thereafter, a thermoplastic resin film described below were laminated to this adhesive layer (E) in a manner that the back face side of the thermoplastic resin film was in contact with the adhesive layer (E), and the thermoplastic resin film and the glassine paper were pressure-adhered using a pressure roll to form the adhesive layer (E) on the thermoplastic resin film.

Formation of recording layer (F)

As the recording layer (F), an anchor coat layer, a thermosensitive recording layer, or an inkjet receiving layer were produced.

Formation of anchor coat layer

To prepare a coating solution for an anchor coat layer, 50 parts by mass of polyester resin solution (VYLON GK810; manufactured by Toyobo Co., Ltd.; 40% by mass polyester resin), 1 part by mass of fumed silica (AEROSIL R972; manufactured by Nippon Aerosil Co., Ltd.; average particle size: 16 nm), 44 parts by mass of toluene; 15 parts by mass of cyclohexanone, 15 parts by mass of butyl acetate, and 0.1 parts by mass of silicone oil (PAINTAD M; manufactured by Dow Corning Corporation) were stirred and mixed. Thereafter, the coating solution for the anchor coat layer prepared as described above was coated on the surface coating layer of the front face side of the thermoplastic resin film using a Meyer bar #20 and a bar coater. The coating solution for the anchor coat layer was dried at 60°C to form an anchor coat layer.

Formation of thermosensitive recording layer

A composition formed from 4 parts by mass of 3-(N-methyl-N-cyclohexylamino)-6-methyl-7-anilinofluoran, 1 part by mass of 3-diethylamino-7-orthochloroanilinofluoran, and 20 parts by mass of 5% aqueous solution of hydroxyethyl cellulose was pulverized to an average particle size of 2 $\mu$m by a sand grinder to form a liquid A. Meanwhile, a composition formed from 25 parts by mass of 4,4'-isopropylidenediphenol (bisphenol A), 15 parts by mass of stearamide, and 140 parts by mass of 5% aqueous solution of hydroxyethyl cellulose was pulverized to an average particle size of 2 $\mu$m by a sand grinder to form a liquid B. Thereafter, 25 parts by mass of the liquid A, 180 parts by mass of the liquid B, 70 parts by mass of 50% water dispersion of talc, and 240 parts by mass of 5% aqueous solution of hydroxyethyl cellulose as a binder were mixed to obtain a coating solution for forming a thermosensitive recording layer. Thereafter, the coating solution for forming a thermosensitive recording layer prepared as described above was coated on the surface coating layer of the front face side of the thermoplastic resin film using a Meyer bar #2 and a bar coater. A thermosensitive recording layer was formed by drying the coating solution for forming a thermosensitive recording layer at 60°C.

Formation of inkjet receiving layer

To a solution, in which 30 parts by mass of cation polymer (Sumirez Resin 1001; manufactured by Taoka Chemical Co., Ltd.; 30% by mass cation polymer) was dissolved in 1000 parts by mass of water, 100 parts by mass of fumed silica (CAB-O-SIL M-5; manufactured by Cabot Corporation; BET specific surface area: 200 m$^2$/g; pH: 4.0) was gradually added and mixed to form a dispersion. To this dispersion, 200 parts by mass of 10% by mass aqueous solution of fully saponified polyvinyl alcohol (PVA-140H; manufactured by Kuraray Co., Ltd.) was added and stirred for 1 hour. Then, water was added to adjust the concentration to 8% by mass to obtain a coating solution for an inkjet receiving layer. Thereafter, the coating solution for an inkjet receiving layer prepared as described above was coated on the surface coating layer of the front face of the thermoplastic resin film using a Meyer bar #60 and a bar coater. The coating solution for the inkjet receiving layer was dried at 105°C to form an inkjet receiving layer.

Working Examples

Production of thermoplastic resin film having coating layer and production of label-attached hollow molded container

Working Example 1:

On the substrate layer (A) side (front face) of the thermoplastic resin film obtained in Sheet Forming Example 1, corona discharge treatment was performed at a watt density of 60 W·min/m$^2$. The coating agent of Production Example 1 was coated on the surface that had undergone the corona discharge treatment in a manner that the wet coated amount was 5 g/m$^2$ using a bar coater, and dried at 70°C for 1 minute to form a surface coat on the thermoplastic resin film surface.

Working Examples 2 to 19 and Comparative Examples 1 to 4

Surface coatings were formed on the thermoplastic resin film surfaces in the same manner as in Working Example 1 except for changing the sheet forming example of thermoplastic resin film, the preparation example of coating agent, the wet coated amount and coated surface, presence/absence of adhesive layer (E), and presence/absence of recording layer (F) and type thereof, of Production Example 1 to those described in Table 5.
Furthermore,
[0216] Forming conditions of the surface coating layers of the working examples and comparative examples of the thermoplastic resin films, and evaluation results of the thermoplastic resin films are shown in Table 5. As the forming conditions of the surface coating layers in Table 5, type of thermoplastic resin film, type of coating agent, coated amount of coating agent (wet coated amount and dry coated amount) [g/m$^2$], and type of coated surface are shown. As the evaluation results in Table 5, static charge half-life period S at 23°C/30% [sec], water contact angle H [°], evaluation result of offset printing (printability and water resistance), evaluation result of humidification promoting printing test at 40°C/80%/24 hours (ink transfer and ink adhesion), and evaluation result of appearance of hollow molded container using the thermoplastic resin film having a surface coating layer as an in-mold label are shown.

[Table 5-1]

| | Forming conditions of surface coating layer | | | | |
|---|---|---|---|---|---|
| | Sheet Forming Example of thermoplastic resin film | Preparation Example of coating agent | Wet coated amount | Dry coated amount D | Coated surface |
| | | | g/m$^2$ | g/m$^2$ | |
| Working Example 1 | 1 | 1 | 5 | 0.53 | Front face |
| Working Example 2 | 1 | 1 | 40 | 4.26 | Front face |
| Working Example 3 | 1 | 2 | 5 | 0.51 | Both faces |
| Working Example 4 | 1 | 3 | 10 | 1.07 | Front face |
| Working Example 5 | 1 | 4 | 5 | 0.48 | Front face |
| Working Example 6 | 1 | 5 | 10 | 0.98 | Front face |
| Working Example 7 | 1 | 10 | 10 | 1.44 | Front face |
| Working Example 8 | 1 | 10 | 40 | 5.75 | Front face |
| Working Example 9 | 1 | 11 | 5 | 1.04 | Front face |
| Working Example 10 | 1 | 12 | 10 | 2.52 | Front face |
| Working Example 11 | 1 | 13 | 10 | 0.14 | Front face |
| Working Example 12 | 1 | 15 | 5 | 0.56 | Front face |
| Working Example 13 | 1 | 16 | 5 | 0.56 | Front face |
| Working Example 14 | 1 | 17 | 5 | 0.56 | Front face |
| Working Example 15 | 2 | 1 | 10 | 1.07 | Front face |
| Working Example 16 | 2 | 2 | 10 | 1.01 | Front face |
| Working Example 17 | 2 | 2 | 5 | 0.51 | Front face |
| Working Example 18 | 2 | 9 | 15 | 2.34 | Front face |
| Working Example 19 | 3 | 15 | 5 | 0.56 | Front face |
| Comparative Example 1 | 1 | 7 | 5 | 0.49 | Front face |

(continued)

| | Forming conditions of surface coating layer | | | | |
|---|---|---|---|---|---|
| | Sheet Forming Example of thermoplastic resin film | Preparation Example of coating agent | Wet coated amount | Dry coated amount D | Coated surface |
| | | | g/m² | g/m² | |
| Comparative Example 2 | 1 | 8 | 5 | 0.03 | Front face |
| Comparative Example 3 | 1 | 6 | 5 | 0.00 | Front face |
| Comparative Example 4 | 1 | 14 | 5 | 0.00 | Front face |

[Table 5-2]

| | Evaluations of thermoplastic resin film | | | | | | | |
|---|---|---|---|---|---|---|---|---|
| | 75° Glossiness of front face | Static charge half-life period S (23°C/ 30 %) | Water contact angle H | Evaluations of UV offset printability | | | | In-mold molding |
| | | | | Normal condition printing test | | Humidification promoting printing test (40°C/80%/2 weeks) | | |
| | % | sec | ° | Printability | Water resistance | Ink transfer | Ink adhesion | |
| Working Example 1 | 80 | 10 | 80 | ◎ | ◎ | ◎ | ◎ | ◎ |
| Working Example 2 | 85 | 3 | 76 | ◎ | ○ | ◎ | ◎ | ◎ |
| Working Example 3 | 81 | 12 | 88 | ◎ | ○ | ◎ | ○ | ○ |
| Working Example 4 | 80 | 62 | 85 | ◎ | ◎ | ◎ | ◎ | ◎ |
| Working Example 5 | 75 | 84 | 90 | Δ | ◎ | Δ | ○ | ◎ |
| Working Example 6 | 74 | 9 | 99 | ○ | ○ | ◎ | ◎ | ◎ |
| Working Example 7 | 81 | 9 | 65 | ○ | Δ | ○ | ○ | ◎ |
| Working Example 8 | 85 | 1 | 32 | Δ | ○ | Δ | Δ | ◎ |
| Working Example 9 | 82 | 74 | 85 | ◎ | Δ | ○ | Δ | ◎ |
| Working Example 10 | 80 | 14 | 105 | ◎ | Δ | ◎ | Δ | ◎ |
| Working Example 11 | 86 | 276 | 121 | Δ | ◎ | ○ | Δ | ◎ |

(continued)

| | Evaluations of thermoplastic resin film | | | | | | | |
| | 75° Glossiness of front face | Static charge half-life period S (23°C/ 30 %) | Water contact angle H | Evaluations of UV offset printability | | | | In-mold molding |
| | | | | Normal condition printing test | | Humidification promoting printing test (40°C/80%/2 weeks) | | |
| | % | sec | ° | Printability | Water resistance | Ink transfer | Ink adhesion | |
| Working Example 12 | 82 | 5 | 89 | ◎ | ◎ | ◎ | ◎ | ◎ |
| Working Example 13 | 85 | 5 | 89 | ◎ | ◎ | ◎ | ◎ | ◎ |
| Working Example 14 | 66 | 5 | 89 | ◎ | ○ | ◎ | ○ | ◎ |
| Working Example 15 | 88 | 6 | 87 | ◎ | ◎ | ◎ | ◎ | ◎ |
| Working Example 16 | 90 | 11 | 90 | ◎ | ○ | ◎ | ○ | ◎ |
| Working Example 17 | 90 | 15 | 87 | ◎ | ○ | ◎ | Δ | ◎ |
| Working Example 18 | 91 | 10 | 92 | ○ | ○ | ○ | ○ | ◎ |
| Working Example 19 | 89 | 7 | 93 | ○ | ◎ | ○ | ◎ | ◎ |
| Comparative Example 1 | 75 | 300< | 95 | × | ○ | ○ | ○ | Δ |
| Comparative Example 2 | 82 | 300< | 96 | ○ | × | × | ○ | Δ |
| Comparative Example 3 | 84 | 2 | 15 | Δ | × | ○ | Δ | ◎ |
| Comparative Example 4 | 85 | 3 | 18 | Δ | × | Δ | Δ | ◎ |

Working Example 20:

Surface coating layers were provided on the both faces of the thermoplastic resin film of Sheet Forming Example 3 as described in Table 6A, and one of the faces was used as a front face. Then, evaluation of UV offset printability, evaluation of UV inkjet printability, evaluation of melt thermal transfer printability, and evaluation of electrophotographic printability of the front face were performed by the methods described above. The results are shown in Table 6B and Table 6C.

Working Examples 22, 26, 28, 30, 32, and 36:

Various evaluations shown in at least one of Table 6B or Table 6C were performed for the front face that was provided on a surface coating layer on at least one face of the thermoplastic resin film as described in Table 6A, in the same manner as in Working Example 20.

Working Example 21:

As described in Table 6A, a surface coating layer was provided on one face of the thermoplastic resin film of Sheet Forming Example 3, and the face provided with the surface coating layer was used as a front face. Then, an anchor coat layer was formed on the surface coating layer as a recording layer (F) and then an adhesive layer (E) was provided on a back face. Thereafter, evaluation of melt thermal transfer printability and evaluation of electrophotographic printability of the front face were performed by the methods described above. The results are shown in Table 6C.

Working Examples 23, 27, 29, 31, 33, and 37:

In the same manner as in Working Example 21, as described in Table 6A, a surface coating layer was provided on at least one face of the thermoplastic resin film, and the face provided with the surface coating layer was used as a front face. Then, an anchor coat layer was formed on the surface coating layer as a recording layer (F). Thereafter, for the front face, various evaluations shown in at least one of Table 6B or Table 6C were performed.

Working Example 24:

As described in Table 6A, a surface coating layer was provided on both faces of the thermoplastic resin film of Sheet Forming Example 4. One of the surface coating layer faces was used as a front face, and a thermosensitive recording layer was formed on the surface coating layer as a recording layer (F). Thereafter, evaluation of direct thermosensitive printability was performed for the front face by the method described above. The results are shown in Table 6C.

Working Example 34:

As described in Table 6A, a surface coating layer was provided on both faces of the thermoplastic resin film of Sheet Forming Example 8. One of the surface coating layer faces was used as a front face, and a thermosensitive recording layer was formed on the surface coating layer as a recording layer (F). Thereafter, evaluation of direct thermosensitive printability was performed for the front face as described in Table 6. The results are shown in Table 6C.

Working Example 25:

As described in Table 6A, a surface coating layer was provided on both faces of the thermoplastic resin film of Sheet Forming Example 4. One of the surface coating layer faces was used as a front face, and an inkjet receiving layer was formed on the surface coating layer as a recording layer (F). Thereafter, evaluation of water-based inkjet printability was performed for the front face by the method described above. The results are shown in Table 6C.

Working Example 35:

As described in Table 6A, a surface coating layer was provided on both faces of the thermoplastic resin film of Sheet Forming Example 8. One of the surface coating layer faces was used as a front face, and an inkjet receiving layer was formed on the surface coating layer as a recording layer (F). Thereafter, evaluation of water-based inkjet printability was performed for the front face by the method described above. The results are shown in Table 6C.

As shown in Table 5, the thermoplastic resin films of Working Examples 1 to 19, which comprise a surface coating layer derived from metal oxide-containing microparticles and a dispersion of an organic polymer in a solvent provided on at least one face of the thermoplastic resin film and which have a static charge half-life period S on the thermoplastic resin film face that is provided with the surface coating layer of 300 seconds or shorter as measured by a half-life period measurement method stipulated in JIS L 1094:1997, exhibited excellent evaluation results of offset printability, and even in humidification promoting printing test (40°C, 80%, 2 weeks), ink was not completely peeled off and the evaluation results were excellent.

On the other hand, the static charge half-life period S of the thermoplastic resin films of Comparative Example 1 and Comparative Example 2, which did not contain a component derived from metal oxide-containing microparticles in the surface coating layer, was longer than 300 seconds. As a result of the longer static charge half-life period S, the thermoplastic resin films of Comparative Example 1 and Comparative Example 2 caused problems in the evaluation of offset printability such that two sheets were supplied during paper feeding, and sheets were unevenly ejected during paper ejection due to static electricity.

Furthermore, the thermoplastic resin films of Comparative Examples 2 to 4 did not contain a component derived from dispersion of an organic polymer in a solvent in the surface coating layer. In this case, in the evaluation of UV offset printability, water resistance after printing was not exhibited.

When Working Examples 1 to 19 and Comparative Examples 1 and 2 are compared, it is found that the static charge half-life period S can be made smaller and a resin film having antistatic performance can be obtained by forming a surface coating layer derived from a coating solution containing metal oxide-containing microparticles on at least one face of the resin film. In addition, when Working Examples 1 to 19 and Comparative Examples 2 to 4 are compared, it is found that a resin film having excellent antistatic performance, and printability or water resistance can be obtained by further adding a dispersion of an organic polymer in a solvent to the coating solution.

Among the working examples, when Working Examples 1 to 6, 11 to 16, 18 and 19, and Working Examples 7 to 10 and 17 are compared, it is found that water resistance in the offset printing or ink adhesion in the humidification promoting test of the thermoplastic resin film becomes excellent when the content of the component derived from dispersion of an organic polymer in a solvent in the surface coating layer exceeds a particular threshold value. Furthermore, by adding a water-soluble polymer in the coating solution, a coated film having adhesion even after drying the coating solution can be formed. For example, when Working Example 1 and Working Example 3 are compared, it is found that water resistance in the offset printing or ink adhesion in the humidification promoting test of the thermoplastic resin film becomes excellent by blending the component derived from the water-soluble polymer.

[Table 6A]

| | Forming conditions of surface coating layer | | | | | Back face | Front face |
|---|---|---|---|---|---|---|---|
| | Sheet Forming Example of thermoplastic resin film | Preparation Example of coating agent | Wet coated amount | Dry coated amount D | Coated surface | Adhesive layer (E) | Recording layer (F) |
| | | | $g/m^2$ | $g/m^2$ | | | |
| Working Example 20 | 3 | 15 | 5 | 0.56 | Both faces | - | - |
| Working Example 21 | 3 | 15 | 5 | 0.56 | Front face | ○ | Anchor coat layer |
| Working Example 22 | 4 | 15 | 5 | 0.56 | Both faces | - | - |
| Working Example 23 | 4 | 15 | 5 | 0.56 | Front face | ○ | Anchor coat layer |
| Working Example 24 | 4 | 15 | 5 | 0.56 | Both faces | - | Thermosensitive recording layer |
| Working Example 25 | 4 | 15 | 5 | 0.56 | Both faces | - | Inkj et receiving layer |
| Working Example 26 | 5 | 15 | 5 | 0.56 | Both faces | - | - |
| Working Example 27 | 5 | 15 | 5 | 0.56 | Both faces | - | Anchor coat layer |
| Working Example 28 | 6 | 15 | 5 | 0.56 | Front face | - | - |

(continued)

| | Forming conditions of surface coating layer | | | | | Back face | Front face |
|---|---|---|---|---|---|---|---|
| | Sheet Forming Example of thermoplastic resin film | Preparation Example of coating agent | Wet coated amount | Dry coated amount D | Coated surface | Adhesive layer (E) | Recording layer (F) |
| | | | g/m² | g/m² | | | |
| Working Example 29 | 6 | 15 | 5 | 0.56 | Front face | ○ | Anchor coat layer |
| Working Example 30 | 7 | 15 | 5 | 0.56 | Both faces | - | - |
| Working Example 31 | 7 | 15 | 5 | 0.56 | Both faces | - | Anchor coat layer |
| Working Example 32 | 8 | 15 | 5 | 0.56 | Both faces | - | - |
| Working Example 33 | 8 | 15 | 5 | 0.56 | Front face | ○ | Anchor coat layer |
| Working Example 34 | 8 | 15 | 5 | 0.56 | Both faces | - | Thermosensitive recording layer |
| Working Example 35 | 8 | 15 | 5 | 0.56 | Both faces | - | Inkjet receiving layer |
| Working Example 36 | 9 | 15 | 5 | 0.56 | Both faces | - | - |
| Working Example 37 | 9 | 15 | 5 | 0.56 | Front face | ○ | Anchor coat layer |

[Table 6B]

| | Evaluations of thermoplastic resin film | | | | | | | | | | |
| | Opacity | 75° Glossiness of front face | Static charge half-life period S (23°C/30%) | Water contact angle H | Evaluations of UV offset printability | | | | Evaluations of UV inkjet printability | | |
| | | | | | Normal condition printing test | | Humidification promoting printing test (40°C/80%/2 weeks) | | Bleeding | Ink adhesion | |
| | % | % | sec | ° | Printability | Water resistance | Ink transfer | Ink adhesion | | Dry | Water resistance |
| Working Example 20 | 84 | 30 | 7 | 93 | ◎ | ○ | ◎ | ○ | ◎ | ○ | ○ |
| Working Example 21 | - | - | - | - | - | - | - | - | - | - | - |
| Working Example 22 | 94 | 25 | 10 | 86 | ◎ | ◎ | ◎ | ◎ | ◎ | ◎ | ○ |
| Working Example 23 | - | - | - | - | - | - | - | - | - | - | - |
| Working Example 24 | - | - | - | - | - | - | - | - | - | - | - |
| Working Example 25 | - | - | - | - | - | - | - | - | - | - | - |
| Working Example 26 | 65 | 19 | 7 | 87 | ◎ | ◎ | ◎ | ◎ | ◎ | ◎ | ○ |
| Working Example 27 | - | - | - | - | - | - | - | - | - | - | - |

(continued)

| | Evaluations of thermoplastic resin film | | | | | | | | | | |
| | Opacity | 75° Glossiness of front face | Static charge half-life period S (23°C/30%) | Water contact angle H | Evaluations of UV offset printability | | | | Evaluations of UV inkjet printability | | |
| | | | | | Normal condition printing test | | Humidification promoting printing test (40°C/80%/2 weeks) | | Bleeding | Ink adhesion | |
| | % | % | sec | ° | Printability | Water resistance | Ink transfer | Ink adhesion | | Dry | Water resistance |
| Working Example 28 | 90 | 24 | 8 | 84 | ◎ | ◎ | ◎ | ◎ | ◎ | ◎ | ○ |
| Working Example 29 | - | - | - | - | - | - | - | - | - | - | - |
| Working Example 30 | 95 | 82 | 7 | 90 | ○ | ○ | ○ | Δ | Δ | ○ | Δ |
| Working Example 31 | - | - | - | - | - | - | - | - | - | - | - |
| Working Example 32 | 94 | 100 | 10 | 90 | ◎ | ◎ | ◎ | ◎ | ○ | ○ | ○ |
| Working Example 33 | - | - | - | - | - | - | - | - | - | - | - |
| Working Example 34 | - | - | - | - | - | - | - | - | - | - | - |
| Working Example 35 | - | - | - | - | - | - | - | - | - | - | - |

| | Evaluations of thermoplastic resin film | | | | | | | | | | |
| | Opacity | 75° Glossiness of front face | Static charge half-life period S (23°C/30%) | Water contact angle H | Evaluations of UV offset printability | | | | Evaluations of UV inkjet printability | | |
| | | | | | Normal condition printing test | | Humidification promoting printing test (40°C/80%/2 weeks) | | Bleeding | Ink adhesion | |
| | | | | | Printability | Water resistance | Ink transfer | Ink adhesion | | Dry | Water resistance |
| | % | % | sec | ° | | | | | | | |
| Working Example 36 | 92 | 39 | 10 | 85 | ○ | ○ | ○ | ○ | ○ | ○ | ○ |
| Working Example 37 | - | - | - | - | ◎ | ○ | ○ | ○ | ○ | ○ | ○ |

EP 3 064 539 B1

[Table 6C]

| | Evaluations of thermoplastic resin film | | | | | | | | | | | |
| | Evaluation of direct thermo sensitive printability | Water-based inkjet | | Evaluations of melt thermal transfer printability (35°C, 85%) | | | | | | | Evaluations of electrophotographic printability | | |
| | Image quality | Image quality | | Ink transfer ANSI Grade | Ink adhesion ANSI Grade | | Friction resistance ANSI Grade | | | Toner adhesion | | Fusion properties with hot roll |
| | | Dye | Pigment | | Dry | Water resistance | Dry | Water | Ethanol | Dry | Water resistance | |
| Working Example 20 | - | - | - | B | B | B | A | B | C | ○ | △ | ◎ |
| Working Example 21 | - | - | - | B | A | B | A | B | B | ○ | △ | - |
| Working Example 22 | - | - | - | A | A | B | A | B | C | ○ | △ | ◎ |
| Working Example 23 | - | - | - | A | A | B | A | B | B | ◎ | ○ | - |
| Working Example 24 | ◎ | - | - | - | - | - | - | - | - | - | - | - |
| Working Example 25 | - | ◎ | ◎ | - | - | - | - | - | - | - | - | - |
| Working Example 26 | - | - | - | - | - | - | - | - | - | - | - | - |
| Working Example 27 | - | - | - | - | - | - | - | - | - | ○ | △ | ◎ |

| | Evaluations of thermoplastic resin film | | | | | | | | | | | |
| | Evaluation of direct thermo sensitive printability | Water-based inkjet | | Evaluations of melt thermal transfer printability (35°C, 85%) | | | | | | Evaluations of electrophotographic printability | | |
| | Image quality | Image quality | | Ink transfer ANSI Grade | Ink adhesion ANSI Grade | | Friction resistance ANSI Grade | | | Toner adhesion | | Fusion properties with hot roll |
| | | Dye | Pigment | | Dry | Water resistance | Dry | Water | Ethanol | Dry | Water resistance | |
| Working Example 28 | - | - | - | A | A | B | A | B | C | ○ | △ | ◎ |
| Working Example 29 | - | - | - | A | A | B | A | B | B | ◎ | ○ | - |
| Working Example 30 | - | - | - | - | - | - | - | - | - | △ | △ | ◎ |
| Working Example 31 | - | - | - | - | - | - | - | - | - | ○ | ○ | ◎ |
| Working Example 32 | - | - | - | B | B | B | B | C | C | △ | △ | ◎ |
| Working Example 33 | - | - | - | A | A | B | A | B | B | ○ | ○ | - |
| Working Example 34 | ◎ | - | - | - | - | - | - | - | - | - | - | - |
| Working Example 35 | - | ◎ | ◎ | - | - | - | - | - | - | - | - | - |

EP 3 064 539 B1

48

(continued)

| | Evaluations of thermoplastic resin film | | | | | | | | | | | |
| | Evaluation of direct thermo sensitive printability | Water-based inkjet | | Evaluations of melt thermal transfer printability (35°C, 85%) | | | | | | Evaluations of electrophotographic printability | | |
| | Image quality | Image quality | | Ink transfer ANSI Grade | Ink adhesion ANSI Grade | | Friction resistance ANSI Grade | | | Toner adhesion | | Fusion properties with hot roll |
| | | Dye | Pigment | | Dry | Water resistance | Dry | Water | Ethanol | Dry | Water resistance | |
| Working Example 36 | - | - | - | B | B | B | A | B | C | ○ | Δ | ◎ |
| Working Example 37 | - | - | - | B | A | B | A | B | B | ○ | Δ | - |

In Table 6A, Table 6B, and Table 6C, "-" indicates "no corresponding layer". In Table 6B and Table 6C, items noted as "-" indicate that the evaluations were not performed. In Table 6A, Table 6B, and Table 6C, as shown in Working Examples 20, 22, 26, 28, 30, 32, 36, and 37, it is found that information can be directly printed on the surface coating layer. Furthermore, a wide variety of printing methods, such as UV offset printing, UV inkjet printing, melt thermal transfer printing, and electrophotographic printing, can be applied. Furthermore, when each set of Working Examples 20 and 21, 22 and 23, 28 and 29, 30 and 31, 32 and 33, and 36 and 37 are compared, by providing an anchor coat layer on the surface coating layer, it is found that printed materials printed by melt thermal transfer printing or electrophotographic printing enhances adhesion to the thermoplastic resin film.

As shown in Working Examples 24 and 34, it is found that information can be printed by direct thermosensitive printing by providing a thermosensitive recording layer as a recording layer (F) on the surface coating layer. Furthermore, as shown in Working Examples 27 and 37, it is found that information can be printed by water-based dye inkjet recording and water-based pigment inkjet recording by providing an inkjet receiving layer as a recording layer (F) on the surface coating layer.

As shown in Working Examples 21, 23, 29, 33, and 37, it is found that an adhesive film can be obtained by providing an adhesive layer (E) on the back face of the thermoplastic resin film. In addition, it is found that each working example can be applied as a label for in-mold molding or a label for adhering.

As described above, the present invention was explained using embodiments; however, the technical scope of the present invention is not limited to the description of the above embodiments. It is apparent to persons skilled in the art that various modifications and improvements can be added to the embodiments described above. Furthermore, in the range that does not technically contradict, features described for a particular embodiment can be applied to another embodiment. It is also apparent from the scope of the claims that the embodiments added with such modifications or improvements can be included in the technical scope of the invention. For example, in the specification of the present application, a thermoplastic resin film comprising a surface coating layer derived from metal oxide-containing microparticles on at least one face of the thermoplastic resin film, the thermoplastic resin film having a static charge half-life period S on the thermoplastic resin film face that is provided with the surface coating layer of 300 seconds or shorter as measured by a half-life period measurement method stipulated in JIS L 1094:1997, and a label-attached hollow molded container which is formed by adhering the thermoplastic resin film by in-mold molding, an adhesive film, a label and a film for printing are described.

Note that the operations, procedures, steps, and processes of each stage performed by an apparatus, system, and method shown in the claims, specifications, or drawings can be performed in any order as long as the order is not indicated by "prior to," "before," or the like and as long as the output from a previous process is not used in a later process. Even when the process flow is described using phrases such as "first" or "next" in the claims, specifications, or drawings, it does not necessarily mean that the process must be performed in this order.

Industrial Applicability

A thermoplastic resin film having excellent antistatic performance of the surface was obtained. Furthermore, a thermoplastic resin film having excellent printability or water resistance of a surface coating layer was obtained. Therefore, troubles in paper feeding and ejection during printing can be improved. Furthermore, even when the film prior to printing is stored in a high humidity environment, ink transfer failure due to deterioration of the surface coating layer can be suppressed. As a result, the present invention is suitable for all uses of printing. Furthermore, when the film is processed, handling failure due to static electricity can be suppressed. Therefore, the present invention is suitable for use as labels or the like. Furthermore, peeling of printing ink or deformation of the thermoplastic resin film during in-mold molding can be suppressed. Therefore, the present invention is suitable for producing a label-attached plastic container which is formed by adhering the thermoplastic resin film. Furthermore, an adhesive film and adhesive label can be obtained by providing an adhesive layer, and a label and/or printing film that can print variable information can be obtained by providing a recording layer.

**Claims**

1. A thermoplastic resin film comprising a surface coating layer derived from metal oxide-containing microparticles having an average primary particle size of 200 nm or less and a dispersion of an organic polymer in a solvent provided on at least one face of the thermoplastic resin film;
   the surface coating layer containing 40% by mass or greater of the metal oxide-containing microparticles relative to the total amount of the surface coating layer;
   the metal oxide containing aluminum; and
   a static charge half-life period S on the thermoplastic resin film face that is provided with the surface coating layer being 300 seconds or shorter as measured by a half-life period measurement method stipulated in JIS L 1094:1997.

2. The thermoplastic resin film according to claim 1, wherein the metal oxide contains alumina.

3. The thermoplastic resin film according to claim 1 or 2, wherein the surface coating layer contains a cationic dispersion of an organic polymer in a solvent.

4. The thermoplastic resin film according to claim 1 or 2 wherein the surface coating layer contains a vinyl-based resin emulsion or a polyurethane resin emulsion.

5. The thermoplastic resin film according to any one of claims 1 to 4, wherein the thermoplastic resin film contains from 20 to 99% by mass of thermoplastic resin and from 1 to 80% by mass of inorganic fine powder; or
wherein the thermoplastic resin film contains from 20 to 40% by mass of polyethylene-based resin and from 60 to 80% by mass of inorganic fine powder.

6. The thermoplastic resin film according to any one of claims 1 to 5,
wherein a coated amount D of the surface coating layer is from 0.07 to 20 g/m$^2$.

7. The thermoplastic resin film according to any one of claims 1 to 6,
wherein the surface coating layer contains a component derived from a water-soluble polymer.

8. The thermoplastic resin film according to any one of claims 1 to 7,
wherein the thermoplastic resin film comprises a polypropylene film.

9. The thermoplastic resin film according to claim 8, wherein the polypropylene film is stretched at least in a uniaxial direction;
wherein the polypropylene film comprises at least one layer stretched in a biaxial direction; or
wherein the polypropylene film comprises at least one layer obtained by calender forming.

10. The thermoplastic resin film according to any one of claims 1 to 9, wherein
the thermoplastic resin film comprises at least a front face, a substrate layer (A) containing a thermoplastic resin, a heat seal layer (B), and a back face in this order; and
the front face of the thermoplastic resin film has the surface coating layer.

11. The thermoplastic resin film according to any one of claims 1 to 10, wherein
the thermoplastic resin film comprises at least a front face, a substrate layer (A), a strengthening layer (C), and a back face in this order;
the content of the inorganic fine powder contained in the substrate layer (A) is greater than the content of the inorganic fine powder contained in the strengthening layer (C); and
the front face of the thermoplastic resin film has the surface coating layer.

12. The thermoplastic resin film according to any one of claims 1 to 11, wherein
the thermoplastic resin film comprises at least a front face, a highly smooth layer (D) containing from 70 to 100% by mass of a thermoplastic resin and from 0 to 30% by mass of at least one of inorganic fine powder or organic filler, a substrate layer (A), and a back face in this order; and
the front face of the thermoplastic resin film has the surface coating layer.

13. The thermoplastic resin film according to any one of claims 1 to 12, wherein
the thermoplastic resin film comprises at least a front face, a substrate layer (A), and a back face in this order; and
each of the front face and the back face has the surface coating layer.

14. A label-attached hollow molded container which is formed by adhering the thermoplastic resin film described in claim 10 by in-mold molding.

15. An adhesive film comprising an adhesive layer (E) on the back face of the thermoplastic resin film described in claim 11.

16. A label using the thermoplastic resin film described in any one of claims 10 to 12.

17. A film for printing, the film comprising a recording layer (F) on the front face of the thermoplastic resin film described in claim 10 or 13.

**Patentansprüche**

1. Thermoplastischer Harzfilm, eine Oberflächendeckschicht umfassend, die von metalloxidhaltigen Mikropartikeln mit einer mittleren primären Partikelgröße von 200 nm oder weniger, und einer Dispersion eines organischen Polymers in einem Lösungsmittel abgeleitet sind, die auf mindestens einer Seite des thermoplastischen Harzfilms vorgesehen ist;
wobei die Oberflächendeckschicht 40 Masse-% oder mehr der metalloxidhaltigen Mikropartikel in Bezug auf die Gesamtmenge der Oberflächendeckschicht enthält;
das Metalloxid Aluminium enthält; und
eine statische Aufladungshalbwertszeit S an der thermoplastischen Harzfilmseite, die mit der Oberflächendeckschicht versehen ist, wie gemessen durch ein in JIS L 1094:1997 vorgeschriebenes Halbwertszeitmessverfahren, 300 Sekunden oder kürzer ist.

2. Thermoplastischer Harzfilm nach Anspruch 1, wobei das Metalloxid Aluminiumoxid enthält.

3. Thermoplastischer Harzfilm nach Anspruch 1 oder 2, wobei die Oberflächendeckschicht eine kationische Dispersion aus einem organischen Polymer in einem Lösungsmittel enthält.

4. Thermoplastischer Harzfilm nach Anspruch 1 oder 2, wobei die Oberflächendeckschicht eine Harzemulsion auf Vinylbasis oder eine Polyurethanharzemulsion enthält.

5. Thermoplastischer Harzfilm nach einem der Ansprüche 1 bis 4, wobei der thermoplastische Harzfilm 20 bis 99 Masse-% thermoplastisches Harz und 1 bis 80 Masse-% anorganisches feines Pulver enthält; oder
wobei der thermoplastische Harzfilm 20 bis 40 Masse-% Harz auf Polyethylenbasis und 60 bis 80 Masse-% anorganisches feines Pulver enthält.

6. Thermoplastischer Harzfilm nach einem der Ansprüche 1 bis 5, wobei eine Beschichtungsmenge D der Oberflächendeckschicht 0,07 bis 20 g/m$^2$ beträgt.

7. Thermoplastischer Harzfilm nach einem der Ansprüche 1 bis 6, wobei die Oberflächendeckschicht einen Bestandteil enthält, der von einem wasserlöslichen Polymer abgeleitet ist.

8. Thermoplastischer Harzfilm nach einem der Ansprüche 1 bis 7, wobei der thermoplastische Harzfilm einen Polypropylenfilm umfasst.

9. Thermoplastischer Harzfilm nach Anspruch 8, wobei der Polypropylenfilm zumindest in einer uniaxialen Richtung gestreckt ist;
wobei der Polypropylenfilm mindestens eine Schicht umfasst, die in einer biaxialen Richtung gestreckt ist; oder
wobei der Polypropylenfilm mindestens eine Schicht umfasst, die durch Kalanderumformung erhalten wird.

10. Thermoplastischer Harzfilm nach einem der Ansprüche 1 bis 9, wobei
der thermoplastische Harzfilm zumindest eine Vorderseite, eine Substratschicht (A), die ein thermplastisches Harz aufweist, eine Heißsiegelschicht (B) und eine Rückseite in dieser Reihenfolge umfasst; und
die Vorderseite des thermoplastischen Harzfilms die Oberflächendeckschicht aufweist.

11. Thermoplastischer Harzfilm nach einem der Ansprüche 1 bis 10, wobei
der thermoplastische Harzfilm zumindest eine Vorderseite, eine Substratschicht (A), eine Verstärkungsschicht (C) und eine Rückseite in dieser Reihenfolge umfasst;
der Gehalt an anorganischem feinem Pulver, das in der Substratschicht (A) enthalten ist, größer ist als der Gehalt an anorganischem feinem Pulver, das in der Verstärkungsschicht (C) enthalten ist; und
die Vorderseite des thermoplastischen Harzfilms die Oberflächendeckschicht aufweist.

12. Thermoplastischer Harzfilm nach einem der Ansprüche 1 bis 11, wobei
der thermoplastische Harzfilm zumindest eine Vorderseite, eine äußerst glatte Schicht (D), die 70 bis 100 Masse-% thermoplastisches Harz und 0 bis 30 Masse-% eines anorganischen feinen Pulvers und/oder organischen Füllstoffs enthält, eine Substratschicht (A) und eine Rückseite in dieser Reihenfolge umfasst; und die Vorderseite des thermoplastischen Harzfilms die Oberflächendeckschicht aufweist.

13. Thermoplastischer Harzfilm nach einem der Ansprüche 1 bis 12, wobei der thermoplastische Harzfilm zumindest eine Vorderseite, eine Substratschicht (A) und eine Rückseite in dieser Reihenfolge umfasst; und die Vorderseite und die Rückseite jeweils die Oberflächendeckschicht aufweist.

14. Hohler Formbehälter mit daran angebrachtem Etikett, der durch Anhaften des in Anspruch 10 beschriebenen thermoplastischen Harzfilms durch forminterne Formgebung ausgebildet ist.

15. Adhäsiver Film, der eine adhäsive Schicht (E) auf der Rückseite des in Anspruch 11 beschriebenen thermoplastischen Harzfilms umfasst.

16. Etikett, das den in einem der Ansprüche 10 bis 12 beschriebenen thermoplastischen Harzfilm verwendet.

17. Film zum Drucken, wobei der Film eine Aufzeichnungsschicht (F) auf der Vorderseite des in Anspruch 10 oder 13 beschriebenen thermoplastischen Harzfilms umfasst.

**Revendications**

1. Film de résine thermoplastique comprenant une couche de revêtement de surface dérivée de microparticules contenant de l'oxyde de métal ayant une taille de particules primaires moyenne de 200 nm ou moins et une dispersion d'un polymère organique dans un solvant disposé sur au moins une face du film de résine thermoplastique ; la couche de revêtement de surface contenant 40 % en masse ou plus des microparticules contenant de l'oxyde de métal par rapport à la quantité totale de la couche de revêtement de surface ; l'oxyde de métal contenant de l'aluminium ; et une période de demi-vie en charge statique S sur la face de film de résine thermoplastique qui est pourvue de la couche de revêtement de surface étant de 300 secondes ou moins telle que mesurée par un procédé de mesure de période de demi-vie stipulé dans JIS L 1094:1997.

2. Le film de résine thermoplastique selon la revendication 1, sachant que l'oxyde de métal contient de l'alumine.

3. Le film de résine thermoplastique selon la revendication 1 ou 2, sachant que la couche de revêtement de surface contient une dispersion cationique d'un polymère organique dans un solvant.

4. Le film de résine thermoplastique selon la revendication 1 ou 2, sachant que la couche de revêtement de surface contient une émulsion de résine à base de vinyle ou une émulsion de résine de polyuréthane.

5. Le film de résine thermoplastique selon l'une quelconque des revendications 1 à 4, sachant que le film de résine thermoplastique contient de 20 à 99 % en masse de résine thermoplastique et de 1 à 80 % en masse de poudre fine inorganique ; ou sachant que le film de résine thermoplastique contient de 20 à 40 % en masse de résine à base de polyéthylène et de 60 à 80 % en masse de poudre fine inorganique.

6. Le film de résine thermoplastique selon l'une quelconque des revendications 1 à 5, sachant qu'une quantité revêtue D de la couche de revêtement de surface est de 0,07 à 20 g/m$^2$.

7. Le film de résine thermoplastique selon l'une quelconque des revendications 1 à 6, sachant que la couche de revêtement de surface contient un composant dérivé d'un polymère soluble dans l'eau.

8. Le film de résine thermoplastique selon l'une quelconque des revendications 1 à 7, sachant que le film de résine thermoplastique comprend un film de polypropylène.

9. Le film de résine thermoplastique selon la revendication 8, sachant que le film de polypropylène est étiré au moins dans une direction uniaxiale ;

sachant que le film de polypropylène comprend au moins une couche étirée dans une direction biaxiale ; ou
sachant que le film de polypropylène comprend au moins une couche obtenue par formation à la calandre.

10. Le film de résine thermoplastique selon l'une quelconque des revendications 1 à 9, sachant que
le film de résine thermoplastique comprend au moins une face avant, une couche de substrat (A) contenant une résine thermoplastique, une couche thermocollante (B), et une face arrière dans cet ordre ; et
la face avant du film de résine thermoplastique présente la couche de revêtement de surface.

11. Le film de résine thermoplastique selon l'une quelconque des revendications 1 à 10, sachant que
le film de résine thermoplastique comprend au moins une face avant, une couche de substrat (A), une couche de renforcement (C), et une face arrière dans cet ordre ;
le contenu de la poudre fine inorganique contenue dans la couche de substrat (A) est plus grand que le contenu de la poudre fine inorganique contenue dans la couche de renforcement (C) ; et
la face avant du film de résine thermoplastique présente la couche de revêtement de surface.

12. Le film de résine thermoplastique selon l'une quelconque des revendications 1 à 11, sachant que
le film de résine thermoplastique comprend au moins une face avant, une couche ultralisse (D) contenant de 70 à 100 % en masse d'une résine thermoplastique et de 0 à 30 % en masse d'au moins l'une d'une poudre fine inorganique ou d'un matériau de remplissage organique, une couche de substrat (A), et une face arrière dans cet ordre ; et
la face avant du film de résine thermoplastique présente la couche de revêtement de surface.

13. Le film de résine thermoplastique selon l'une quelconque des revendications 1 à 12, sachant que
le film de résine thermoplastique comprend au moins une face avant, une couche de substrat (A), et une face arrière dans cet ordre ; et
chacune de la face avant et de la face arrière présente la couche de revêtement de surface.

14. Récipient moulé creux à étiquette fixée qui est formé par adhésion du film de résine thermoplastique décrit dans la revendication 10 par moulage en moule.

15. Film adhésif comprenant une couche adhésive (E) sur la face arrière du film de résine thermoplastique décrit dans la revendication 11.

16. Étiquette utilisant le film de résine thermoplastique décrit dans l'une quelconque des revendications 10 à 12.

17. Film pour impression, le film comprenant une couche d'enregistrement (F) sur la face avant du film de résine thermoplastique décrit dans la revendication 10 ou 13.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4837075 B
- JP H1105960 U
- JP H9207166 A
- JP 2000290411 A
- JP 2003345052 A
- US 2008182117 A1
- JP S58118843 A
- JP S562149 A
- JP S56106940 A
- JP S56157445 A